# EUROPEAN PATENT APPLICATION

(11) **EP 4 411 565 A1**
(43) Date of publication of application: **07.08.2024**
(21) Application number: 24155370.0
(22) Date of filing: 01.02.2024
(51) Int. Cl.: G06F 16/901

(54) **IN-SITU MESSAGING IN GRAPH-BASED MODELS**

(30) Priority: 01.02.2023 US 202363442682 P; 28.02.2023 US 202363448747 P; 27.11.2023 US 202318519767
(71) Applicant: Infosys Limited, 560-100 Bangalore (IN); InvertIT, Columbus, IN 47302 (US)
(72) Inventor: SCHILDERS, Steven, Columbus, 47203 (US)
(74) Representative: Savi, Massimiliano

(57) **Abstract**

An overlay system is provided that includes a storage element and processing circuitry. The storage element stores an executable graph-based model that includes various executable nodes. Each executable node includes a base node and a set of handler overlay nodes. Each handler overlay node subscribes to messages mapped to the corresponding executable node and processes the messages in conjunction with the corresponding base node. The processing circuitry receives a contextualized stimulus associated with the overlay system and executes an operation associated with the stimulus using one or more handler overlay nodes that are mapped to the stimulus, and one or more base nodes that are associated with the one or more handler overlay nodes, respectively.

## Description

### CROSS-REFERENCE TO RELATED APPLICATIONS

This patent application refers to, claims priority to, and claims the benefit of U.S. Provisional Application No. 63/448,747, filed February 28, 2023 and U.S. Provisional Application No. 63/442,682, filed February 1, 2023, the contents of which are incorporated herein by reference in their entirety.

### FIELD

Various embodiments of the present disclosure relate generally to graph-based models. More specifically, various embodiments of the present disclosure relate to in-situ messaging in executable graph-based models.

### BACKGROUND

Digitization has become a global phenomenon, and hence, most of the things (for example, warehouse management, assembly pipeline, production pipeline, machine handling, or the like) that used to be manual processes have now become computerized. Further, development in the field of science and engineering has opened doors to concepts such as robotics, artificial intelligence and machine learning, or the like. Such developments are innumerable and may belong to different domains. However, a common factor among all such developments is the need to ensure communication among modules working together in order to fulfill a task. For example, modules of a home security system may require to communicate with one another to ensure security.

Traditionally, such modules communicate with one another by way of a communication channel established therebetween. However, such a communication technique may lead to numerous problems such as a limit on a number of modules that can connect to the communication channel, the complex architecture of the communication channel due to a large number of communicating modules that results in latency in the delivery of messages, overloading of the communication channel, dependence of the communication channel on network availability, inability to ensure successful communication, or the like. Hence, such an approach to facilitate communication may have various disadvantages that may negatively affect the task being executed by the communicating modules.

In light of the foregoing, there exists a need for a technical and reliable solution that overcomes the abovementioned problems.

Limitations and disadvantages of conventional and traditional approaches will become apparent to one of skill in the art, through the comparison of described systems with some aspects of the present disclosure, as set forth in the remainder of the present application and with reference to the drawings.

### SUMMARY

Methods and systems for facilitating in-situ messaging using an executable graph-based model are provided substantially as shown in, and described in connection with, at least one of the figures.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

Embodiments of the present disclosure are illustrated by way of example and are not limited by the accompanying figures. Similar references in the figures may indicate similar elements. Elements in the figures are illustrated for simplicity and clarity and have not necessarily been drawn to scale.
FIG. 1 is a graph that illustrates a composition of an executable graph-based model, in accordance with an embodiment of the present disclosure;
FIG. 2 is a block diagram that illustrates a system environment of an overlay system for execution, management, and configuration of executable graph-based models, in accordance with an embodiment of the present disclosure;
FIG. 3 is a block diagram that illustrates a generic structure of a node within the executable graph-based model, in accordance with an embodiment of the present disclosure;
FIG. 4 is a block diagram that illustrates an executable node within the executable graph-based model, in accordance with an embodiment of the present disclosure;
FIG. 5 is a block diagram that illustrates a composition of the executable node that enables persistent storage of data and processing logic associated therewith, in accordance with an embodiment of the present disclosure;
FIG. 6 is a graph that illustrates an implementation of the executable graph-based model, in accordance with an embodiment of the present disclosure;
FIGS. 7A and 7B are schematic diagrams that, collectively, illustrate an example implementation of in-situ communication in an executable graph-based robotic arm model, in accordance with an embodiment of the present disclosure;
FIG. 8 is a schematic diagram that illustrates another example implementation of in-situ communication in an executable graph-based autonomous vehicle model, in accordance with another embodiment of the present disclosure;
FIGS. 9A and 9B are schematic diagrams that, collectively, illustrate yet another example implementation of in-situ communication in an executable graph-based warehouse management model, in accordance with yet another embodiment of the present disclosure;
FIG. 10 is a block diagram that illustrates a message management module of the overlay system, in accordance with an embodiment of the present disclosure;
FIG. 11A is a block diagram that illustrates handling of messages by an executable node, in accordance with an embodiment of the present disclosure;
FIG. 11B is a block diagram that illustrates the handling of messages by the executable node, in accordance with another embodiment of the present disclosure;
FIG. 12 is a block diagram that illustrates a composition of a message, in accordance with an embodiment of the present disclosure;
FIG. 13 shows an example computing system for carrying out methods of the present disclosure, in accordance with an embodiment of the present disclosure; and
FIG. 14 is a flowchart that illustrates a method for facilitating in-situ communication using the executable graph-based model, in accordance with an embodiment of the present disclosure.

### DETAILED DESCRIPTION

The detailed description of the appended drawings is intended as a description of the embodiments of the present disclosure and is not intended to represent the only form in which the present disclosure may be practiced. It is to be understood that the same or equivalent functions may be accomplished by different embodiments that are intended to be encompassed within the spirit and scope of the present disclosure.

### Overview:

Digitization of various processes (for example, industrial processes, robotics, security systems, artificial intelligence and machine learning processes, and so forth) has made communication among modules that facilitate such processes crucial. Presently, communication among modules of a system is facilitated by establishing a communication channel therebetween. The communication channel may have a complex architecture due to a large number of modules communicating within the system. Such complicated architecture leads to a lot of traffic within the communication channel that results in an undesirable wait time for messages being communicated. Further, the messages are delivered to corresponding destination modules in a serial manner that leads to further delays in the delivery of the message. Further, at the destination module, there is no way to detect the failure or success of communication or processing of messages. Hence, the detection of failure of communication takes longer than an acceptable duration of time.

The present disclosure is directed to the facilitation of in-situ communication of messages in executable graph-based models. The executable graph-based models are customized hypergraphs having hyper-edges that include one or more roles and vertices that are realized by way of executable nodes. Each executable node is a base node that is extended by way of one or more overlays. Each executable node is associated with a particular node type. For example, an edge node corresponds to a base node with an edge node type. Nodes (for example, base nodes and executable nodes) are connected with other nodes by way of roles included in an edge node therebetween. In some embodiments, roles are represented by way of nodes of role node-type. Role node between two nodes may be indicative of details regarding an association therebetween. Further, a node (for example, a base node, an executable node, and an overlay node) that may have a messaging requirement may be extended to include publisher overlay nodes and/or handler overlay nodes. The publisher overlay nodes include processing logic for generating and publishing messages, whereas, the handler overlay nodes include processing logic for receiving and processing messages, in conjunction with the corresponding base nodes. A message may be one of a command-type message, a query-type message, and an event-type message. The command-type message is generated and published by a command publisher overlay node and is received and processed by a command handler overlay node. The query-type message is generated and published by a query publisher overlay node and is received and processed by a query handler overlay node. The event-type message is generated and published by an event publisher overlay node and is received and processed by an event handler overlay node. Notably, the present disclosure facilitates the processing of messages at the node level which allows a significant increase in the degree of parallelism with which messages may be processed. Hence, messages being communicated by use of the executable graph-based model require significantly less time.

In an example, an executable graph-based model may include a first node and a second node. The first node may be extended to include a first handler overlay node and a first publisher overlay node. The second executable node may be extended to include a second handler overlay node and the second handler overlay node is extended to include a second publisher overlay node. In operation, the first handler overlay node that is associated with the first node may receive a stimulus from processing circuitry associated with the executable graph-based model. The stimulus may be a command-type message, a query-type message, or an event-type message. Based on the stimulus, the first publisher overlay node may generate and publish a first message that may be subscribed by the second handler overlay node. The second handler overlay node may receive and process the first message in conjunction with a base node of the second executable node. The second publisher overlay node may then generate and publish a second message based on the processing of the first message. The second message may be subscribed and received by a third handler overlay node associated with the first executable node. The third handler overlay node may process the second message to generate an outcome to the stimulus. The in-situ communication using the executable graph-based model is thus facilitated. In the ongoing example, the first and second nodes may be a base node or an executable node.

Traditional approach of facilitating communication involves the delivery of messages to a destination module in a serial manner. Therefore, an increase in the count of messages that are to be delivered also leads to an increase in the wait time required for delivery of each message to the corresponding destination module. On the contrary, the disclosed approach of in-situ communication facilitates the delivery of messages in a parallel manner. Therefore, the increase in the count of messages to be delivered to the corresponding destination node does not lead to a significant increase in wait time for each message to be delivered. Hence, the traditional approach exhibits an increase in latency when there is an increase in messages being communicated, whereas the present disclosure does not exhibit such latency. The traditional approach remains unaware of any failure in communication for a significant duration of time, whereas the disclosed approach detects failure at the module level as soon as it occurs thereby ensuring a robust communication and a significant reduction in time required to detect failure in communication.

Systems and methods for facilitating in-situ communication using executable graph-based models are provided. The systems and methods disclosed herein facilitate the processing of messages at the node level that allows multiple messages to be processed simultaneously, *e.g.*, in a parallel manner. Hence, each message requires significantly less time to be handled as a result of significantly reduced waiting time. Hence, the disclosed systems and methods provide an approach for communication using the executable graph-based models that exhibit significantly reduced latency while facilitating real-time or near real-time communication. The systems and methods disclosed herein may be dynamically scaled up or down to facilitate communication among as many modules as required without overloading the system. As most of the messages being communicated are within the system hence there is a significant decrease in dependence on network availability. Also, the disclosed methods and systems ensure the successful communication of messages by detecting failure at the node level.

The disclosed systems and methods ensure that different types of messages (for example, a command-type message, a query-type message, and an event-type message) are generated and processed differently that is to say in a manner that is tailor-made for the corresponding message. Further, the disclosed systems and methods do not require the data and processing logic to be available at all times, and hence, the data and processing logic when not in use may be stored separately and re-loaded in the corresponding executable node when needed. Thus, the systems and methods disclosed herein provide an efficient approach for in-situ communication of messages using the executable graph-based models in a secured and seamless manner.

### Figure description:

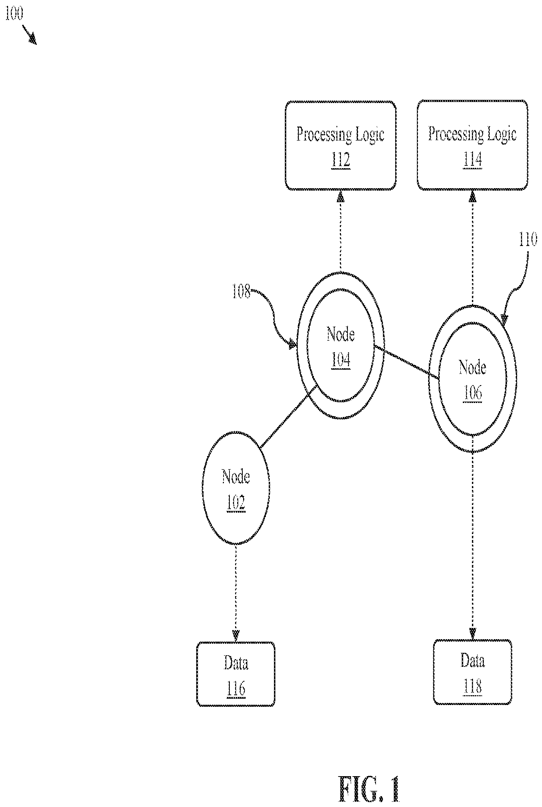

FIG. 1 is a graph that illustrates a composition of an executable graph-based model 100, in accordance with an embodiment of the present disclosure. Referring to FIG. 1, the executable graph-based model 100 is generally formed of a data structure *(e.g.,* a graph-based model or a graphical model) comprising a plurality of nodes 102-106 which can be functionally extended with processing logic via the use of overlays. For example, as shown in FIG. 1, the nodes 104 and 106 are functionally extended with processing logic via the use of overlays 108 and 110, respectively. Although not shown, it will be apparent to a person skilled in the art that the node 102 can be similarly extended with processing logic via the use of one or more overlays. Each overlay includes processing logic, such as processing logic 112 and 114 which are associated with the overlays 108 and 110, respectively. At run-time, data, such as data 116 and 118, is associated with the nodes 102 and 106, respectively, of the executable graph-based model 100, and the overlays 108 and 110 of the nodes 104 and 106, respectively, provide the functionality to respond to stimuli and interact with, manipulate, or otherwise process the data for message generation and message handling based on stimuli. Further, the node 104 inherits the node 102 and hence also inherits the data 116 which is associated with the node 102. In some embodiments, the node 102 may be extended to have one or more overlays. In such embodiments, the node 104 may further inherit the overlays of the node 102.

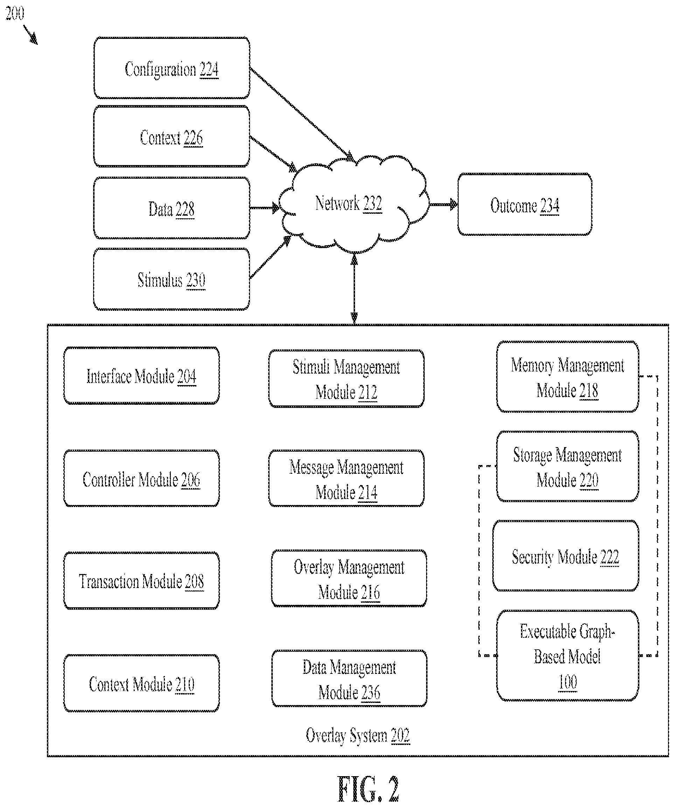

Each element within the executable graph-based model 100 (both the data and the processing functionality) is a node. A node forms the fundamental building block of all executable graph-based models. A node may be an executable node. A node extended by way of an overlay node forms an executable node. One or more nodes are extended to include overlays in order to form the executable graph-based models. As such, the executable graph-based model 100 includes one or more nodes that can be dynamically generated, extended, or processed by one or more other modules within an overlay system (shown in FIG. 2).

As such, the structure and functionality of the data processing are separate from the data itself when offline (or at rest) and are combined dynamically at run-time. The executable graph-based model 100 thus maintains the separability of the data and the processing logic when offline. Moreover, by integrating the data and the processing logic within a single model, processing delays or latencies are reduced because the data and the processing logic exist within the same logical system. Therefore, the executable graph-based model 100 is applicable to a range of time-critical systems where efficient processing of the stimuli is required. In an instance, the executable graph-based model 100 may be used for in-situ communication of messages such as a command, a query, an event, or the like.

FIG. 2 is a block diagram that illustrates a system environment 200 of an overlay system 202 for execution, management, and configuration of executable graph-based models, in accordance with an embodiment of the present disclosure. Referring to FIG. 2, the overlay system 202 includes the executable graph-based model 100. The overlay system 202 further includes an interface module 204, a controller module 206, a transaction module 208, a context module 210, a stimuli management module 212, a message management module 214, an overlay management module 216, a memory management module 218, a storage management module 220, and a security module 222. FIG. 2 further shows a configuration 224, a context 226, data 228, a stimulus 230, a network 232, and an outcome 234. In some embodiments, all the modules of the overlay system 202 except for the executable graph-based model 100 may collectively form the processing circuitry that executes the in-situ messaging within the overlay system 202.

The overlay system 202 may include suitable logic, circuitry, interfaces, and/or code, executable by the circuitry, that may be configured to facilitate in-situ communication in the executable graph-based models (such as the executable graph-based model 100). The executable graph-based model 100 corresponds to application-specific combination of data and processing functionality which is manipulated, processed, and/or otherwise handled by the other modules within the overlay system 202 for generation, communication, and handling (e.g., processing) of messages therein based on the stimulus 230 received by the overlay system 202. The stimulus 230 corresponds to a command-type message, a query-type message, or an event-type message.

The interface module 204 may include suitable logic, circuitry, interfaces, and/or code, executable by the circuitry, configured to provide a common interface between internal modules of the overlay system 202 and/or external sources. The interface module 204 provides an application programmable interface (API), scripting interface, or any other suitable mechanism for interfacing externally or internally with any module of the overlay system 202. As shown in FIG. 1, the configuration 224, the context 226, the data 228, and the stimulus 230 are received by the interface module 204 via the network 232. Similarly, outputs produced by the overlay system 202, such as the outcome 234, are passed by the interface module 204 to the network 232 for consumption or processing by external systems. In one embodiment, the interface module 204 supports one or more messaging patterns or protocols such as the simple object access protocol (SOAP), the representational state transfer (REST) protocol, or the like. The interface module 204 thus allows the overlay system 202 to be deployed in any number of application areas, operational environments, or architecture deployments. Although not illustrated in FIG. 1, the interface module 204 is communicatively coupled (e.g., connected either directly or indirectly) to one or more other modules or elements within the overlay system 202 (such as the controller module 206, the context module 210, the executable graph-based model 100, or the like). In one embodiment, the interface module 204 is communicatively coupled (e.g., connected either directly or indirectly) to one or more overlays within the executable graph-based model 100.

The controller module 206 may include suitable logic, circuitry, interfaces, and/or code, executable by the circuitry, configured to handle and process interactions and executions within the overlay system 202. As will be described in more detail below, stimuli (such as the stimulus 230) and their associated contexts provide the basis for all interactions within the executable graph-based model 100. Processing of such stimuli may lead to execution of processing logic associated with one or more overlays within the executable graph-based model 100. The processing of the stimuli within the overlay system 202 may be referred to as a system transaction. The processing and execution of stimuli (and associated overlay execution) within the overlay system 202 is handled by the controller module 206. The controller module 206 manages all received input stimuli (e.g., the stimulus 230) and processes them based on a corresponding context (e.g., the context 226). The context 226 determines the priority that is assigned to processing the corresponding stimulus by the controller module 206 or the context module 210. This allows each stimulus to be configured with a level of importance and prioritization within the overlay system 202.

The controller module 206 may maintain the integrity of the modules within the overlay system 202 before, during, and after a system transaction. The transaction module 208, which is associated with the controller module 206, is responsible for maintaining the integrity of the overlay system 202 through the lifecycle of a transaction. Maintaining system integrity via the controller module 206 and the transaction module 208 allows a transaction to be rolled back in an event of an expected or unexpected software or hardware fault or failure. The controller module 206 is configured to handle the processing of the stimulus 230 and transactions through architectures such as parallel processing, grid computing, priority queue techniques, or the like. In one embodiment, the controller module 206 and the transaction module 208 are communicatively coupled (*e.g.*, connected either directly or indirectly) to one or more overlays within the executable graph-based model 100.

As stated briefly above, the overlay system 202 utilizes a context-driven architecture whereby the stimulus 230 within the overlay system 202 is associated with the context 226 which is used to adapt the handling or processing of the stimulus 230 by the overlay system 202. The handling or processing of the stimulus 230 is done based on the context 226 associated therewith. Hence, the stimulus 230 is considered to be a contextualized stimulus. The context 226 may include details such as user name, password, access token, device information, time stamp, one or more relevant identifiers, or the like, that are required for processing of messages within the executable graph-based model 100. Each context within the overlay system 202 may be extended to include additional information that is required for the processing of the message (*e.g.*, a query, a command, or an event).

The context module 210 may include suitable logic, circuitry, interfaces, and/or code, executable by the circuitry, configured to manage the handling of contexts within the overlay system 202, and is responsible for processing any received contexts (*e.g.,* the context 226) and translating the received context to an operation execution context. In some examples, the operation execution context is larger than the received context because the context module 210 supplements the received context with further information necessary for the processing of the received context. The context module 210 passes the operational execution context to one or more other modules within the overlay system 202 to drive communication of one or more messages associated with the operational execution context. Contexts within the overlay system 202 can be external or internal. While some contexts apply to all application areas and problem spaces, some applications may require specific contexts to be generated and used to process received stimulus 230. As will be described in more detail below, the executable graph-based model 100 is configurable (*e.g.*, via the configuration 224) so as only to execute within a given execution context for a given stimulus.

The stimuli management module 212 may include suitable logic, circuitry, interfaces, and/or code, executable by the circuitry, configured to process externally received stimuli (*e.g.*, the stimulus 230) and any stimuli generated internally from any module within the overlay system 202. The stimuli management module 212 is communicatively coupled (*e.g.,* connected either directly or indirectly) to one or more overlays within the executable graph-based model 100 to facilitate the processing of stimuli within the executable graph-based model 100. The overlay system 202 utilizes different types of stimuli such as a command (*e.g.,* a transactional request), a query, or an event received from an external system such as an Internet-of-Things (IoT) device. As previously stated, a stimulus (such as the stimulus 230) can be either externally or internally generated. In an example, the stimulus 230 may be a message that is internally triggered (generated) from any of the modules within the overlay system 202. Such internal generation of the stimulus 230 indicates that something has happened within the overlay system 202 such that subsequent handling by one or more other modules within the overlay system 202 may be required. Internal stimulus 230 can also be triggered (generated) from the execution of processing logic associated with overlays within the executable graph-based model 100. In another example, the stimulus 230 may be externally triggered and may be generated based on an input received via a user interface associated with the controller module 206. The externally triggered stimulus 230 may be received in the form of a textual, audio, or visual input. The externally triggered stimulus 230 may be associated with the intent of a user to execute an operation indicated by the stimulus 230. The operation is executed in accordance with information included in the context 226 associated with the stimulus 230.

The stimuli management module 212 may receive the stimuli in real-time or near-real-time and communicate the received stimulus 230 to one or more other modules or nodes of the executable graph-based model 100. In some examples, the stimuli are scheduled in a batch process. The stimuli management module 212 utilizes any suitable synchronous or asynchronous communication architectures or approaches in communicating the stimuli (along with associated information). The stimuli within the overlay system 202 are received and processed (along with a corresponding context) by the stimuli management module 212, which then determines the processing steps to be performed for the communication of messages associated with each stimulus. In one embodiment, the stimuli management module 212 processes the received stimuli in accordance with a predetermined configuration (*e.g.*, the configuration 224) or dynamically determines what processing needs to be performed based on the contexts associated with the stimuli and/or based on a state of the executable graph-based model 100. The state of the executable graph-based model 100 refers to the current state of each node of the executable graph-based model 100 at a given point in time. The state of the executable graph-based model 100 is dynamic and hence may change based on the execution of a message by any of its nodes. In some examples, the processing of a stimulus (such as the stimulus 230) results in the generation, communication, or processing of one or more messages that further result in one or more outcomes being generated (*e.g.*, the outcome 234). Such outcomes are either handled internally by one or more modules in the overlay system 202 or communicated via the interface module 204 as an external outcome. In one embodiment, all stimuli and corresponding outcomes are recorded for auditing and post-processing purposes by, for example, an operations module (not shown) and/or an analytics module (not shown) of the overlay system 202.

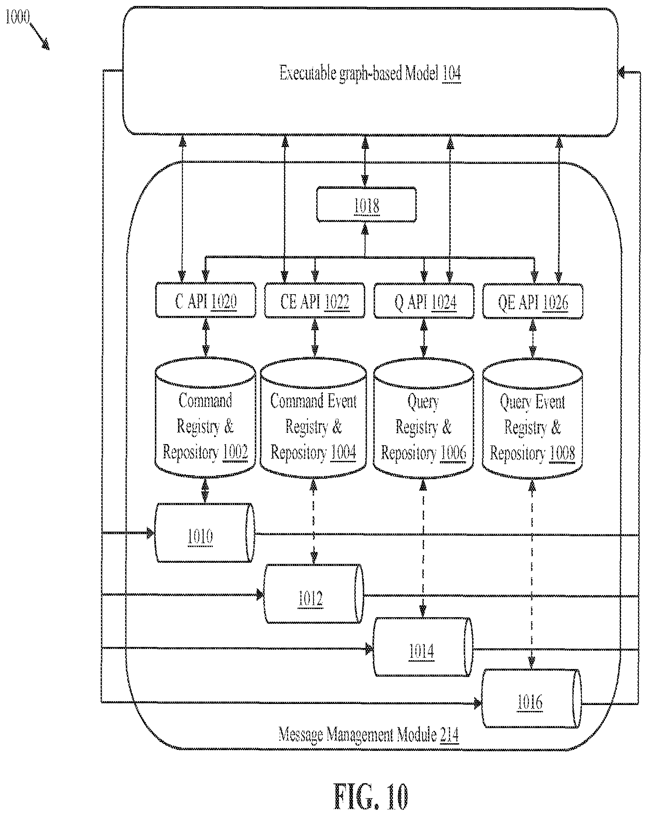

The message management module 214 may include suitable logic, circuitry, interfaces, and/or code, executable by the circuitry, configured to manage all data or information associated with messages communicated within the overlay system 202 (*e.g.,* the data 228) for a given communication network implemented by way of the executable graph-based model 100. Operations performed by the message management module 214 include data loading, data unloading, data modeling, and data processing operations associated with the generation and communication of messages within the overlay system 202. The message management module 214 is communicatively coupled (*e.g.*, connected either directly or indirectly) to one or more other modules within the overlay system 202 to complete some or all of these operations. For example, the storage of data or information associated with messages is handled in conjunction with the storage management module 220 (as described in more detail below). The message management module 214 is further described in conjunction with FIG. 10.

The overlay management module 216 may include suitable logic, circuitry, interfaces, and/or code, executable by the circuitry, configured to manage all overlays within the overlay system 202. Operations performed by the overlay management module 216 include overlay storage management, overlay structure modeling, overlay logic creation and execution, and overlay loading and unloading (within the executable graph-based model 100). The overlay management module 216 is communicatively coupled (*e.g.*, connected either directly or indirectly) to one or more other modules within the overlay system 202 to complete some or all of these operations. For example, overlays can be persisted in some form of physical storage using the storage management module 220 (as described in more detail below). As a further example, overlays can be compiled and preloaded into memory via the memory management module 218 for faster run-time execution.

The memory management module 218 may include suitable logic, circuitry, interfaces, and/or code, executable by the circuitry, configured to manage and optimize the memory usage of the overlay system 202. The memory management module 218 thus helps to improve the responsiveness and efficiency of the processing performed by one or more of the modules within the overlay system 202 by optimizing the memory handling performed by these modules. The memory management module 218 uses direct memory or some form of distributed memory management architecture (*e.g.*, a local or remote caching solution). Additionally, or alternatively, the memory management module 218 deploys multiple different types of memory management architectures and solutions (*e.g*., reactive caching approaches such as lazy loading or a proactive approach such as write-through cache may be employed). These architectures and solutions are deployed in the form of a flat (single-tiered) cache or a multi-tiered caching architecture where each layer of the caching architecture can be implemented using a different caching technology or architecture solution approach. In such implementations, each cache or caching tier can be configured (*e.g.,* by the configuration 224) independently of the requirements for one or more modules of the overlay system 202. For example, data priority and an eviction strategy, such as least-frequently-used (LFU) or least-recently-used (LRU), can be configured for all or parts of the executable graph-based model 100. In one embodiment, the memory management module 218 is communicatively coupled (*e.g.*, connected either directly or indirectly) to one or more overlays within the executable graph-based model 100.

The storage management module 220 may include suitable logic, circuitry, interfaces, and/or code, executable by the circuitry, configured to manage the temporary or permanent storage of data associated with messages being communicated within the overlay system 202. The storage management module 220 is any suitable low-level storage device solution (such as a file system) or any suitable high-level storage technology such as another database technology (*e.g.*, relational database management system (RDBMS) or NoSQL database). The storage management module 220 is directly connected to the storage device upon which the relevant data is persistently stored. For example, the storage management module 220 can directly address the computer-readable medium (*e.g*., hard disk drive, external disk drive, or the like) upon which the data is being read or written. Alternatively, the storage management module 220 is connected to the storage device via a network such as the network 232. As will be described in more detail later in the present disclosure, the storage management module 220 uses 'manifests' to manage the interactions between the storage device and the modules within the overlay system 202. In one embodiment, the storage management module 220 is communicatively coupled (*e.g.*, connected either directly or indirectly) to one or more overlays within the executable graph-based model 100.

As described, storage, loading, and unloading of the executable graph-based model 100 or one or more components thereof is facilitated by the memory management module 218 and the storage management module 220. The memory management module 218 and the storage management module 220 may facilitate such operations by interacting with the storage device. In the present disclosure, the executable graph-based model 100 may be stored in a storage element. The storage element corresponds to a combination of the memory management module 218 and storage management module 220 that may be configured to store the executable graph-based model 100. In some embodiments, the storage element may be a storage module that is managed by the memory management module 218 and storage management module 220, collectively.

The security module 222 may include suitable logic, circuitry, interfaces, and/or code, executable by the circuitry, configured to manage the security of the overlay system 202. This includes the security at a system level and a module level. Security is hardware-related, network-related, or software-related, depending on the operational environment, the architecture of the deployment, or the data and information contained within the overlay system 202. For example, if the system is deployed with a web-accessible API (as described above in relation to the interface module 204), the security module 222 can enforce a hypertext transfer protocol secure (HTTPS) protocol with the necessary certification. As a further example, if the data or information associated with the message received or processed by the overlay system 202 contains Personally Identifiable Information (PII) or Protected Health Information (PHI), the security module 222 can implement one or more layers of data protection to ensure that the PII or PHI are correctly processed and stored. In an additional example, in implementations whereby the overlay system 202 operates on United States of America citizen medical data, the security module 222 may enforce additional protections or policies as defined by the United States Health Insurance Portability and Accountability Act (HIPAA). Similarly, if the overlay system 202 is deployed in the European Union (EU), the security module 222 may enforce additional protections or policies to ensure that the data processed and maintained by the overlay system 202 complies with the General Data Protection Regulation (`GDPR'). In one embodiment, the security module 222 is communicatively coupled (*e.g.*, connected either directly or indirectly) to one or more overlays within the executable graph-based model 100 thereby directly connecting security execution to the data/information in the executable graph-based model 100. The security module 222 thus acts as a centralized coordinator that works in conjunction with the message management module 214 and the overlay management module 216 for managing and executing security-based overlays.

In addition to the abovementioned components, the overlay system 202 further includes a data management module 236. The data management module 236 may include suitable logic, circuitry, interfaces, and/or code, executable by the circuitry, configured to manage all data or information within the overlay system 202 (*e.g.,* the data 228) for a given application. Operations performed by the data management module 236 include data loading, data unloading, data modeling, and data processing. The data management module 236 is communicatively coupled (e.g., connected either directly or indirectly) to one or more other modules within the overlay system 202 to complete some or all of these operations. For example, data storage is handled by the data management module 236 in conjunction with the storage management module 220.

The functionality of two or more of the modules included in the overlay system 202 may be combined within a single module. Conversely, the functionality of a single module can be split into two or more further modules which can be executed on two or more devices. The modules described above in relation to the overlay system 202 can operate in a parallel, distributed, or networked fashion. The overlay system 202 may be implemented in software, hardware, or a combination of both software and hardware. Examples of suitable hardware modules include a general-purpose processor, a field programmable gate array (FPGA), and/or an application-specific integrated circuit (ASIC). Software modules can be expressed in a variety of software languages such as C, C++, Java, Ruby, Visual Basic, Python, and/or other object-oriented, procedural, or programming languages.

It will be apparent to a person skilled in the art that whilst the messages are described throughout the description to be a command-type message, a query-type message, or an event-type message, in other embodiments the message may be a combination of the command-type message, the query-type message, or the event-type message, or any other type of message.

It will be apparent to a person skilled in the art that whilst only one executable graph-based model 100 is shown in FIG. 2, in other embodiments the overlay system 202 stores and maintains more than one executable graph-based model, without deviating from the scope of the present disclosure. In such embodiments, communication in each executable graph-based model is executed in a manner that is similar to the executable graph-based model 100.

Having described the overlay system 202 for executing and managing executable graph-based models, the description will now turn to the elements of an executable graph-based model; specifically, the concept of a node. Unlike conventional graph-based systems, all elements (*e.g.,* data, overlays, etc.) within the executable graph-based model (*e.g.,* the executable graph-based model 100) are implemented as nodes. As will become clear, this allows executable graph-based models to be flexible, extensible, and highly configurable.

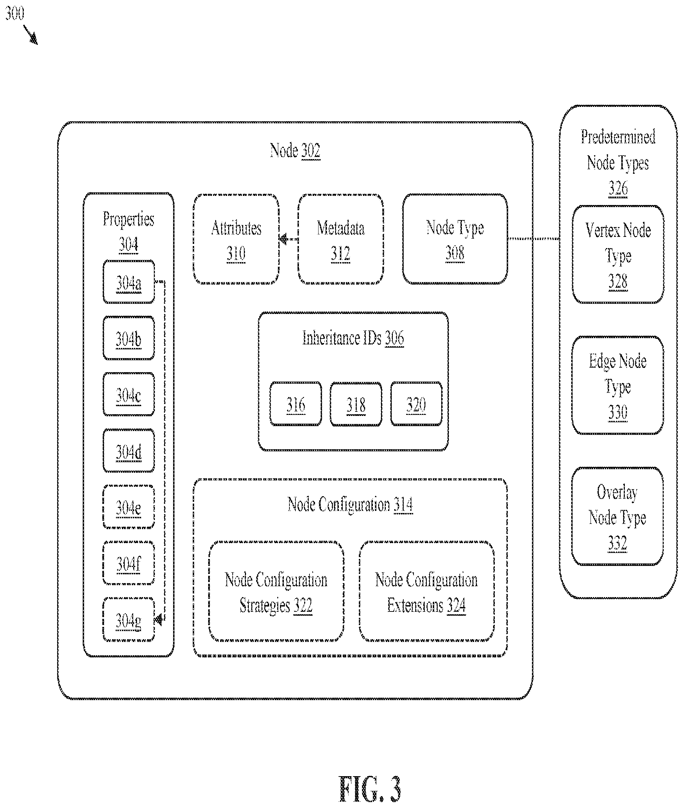

FIG. 3 is a block diagram 300 that illustrates a generic structure of a node 302 within the executable graph-based model 100, in accordance with an embodiment of the present disclosure. Referring to FIG. 3, the node 302 corresponds to the core structure of the executable graph-based model 100 and forms the foundational building block for all data and processing logic within the executable graph-based model 100. The node 302 includes properties 304, inheritance identifiers (IDs) 306, and a node type 308. The node 302 optionally includes one or more attributes 310, metadata 312 associated with the attributes 310, and a node configuration 314.

The properties 304 of the node 302 include a unique ID 304a, a version ID 304b, a namespace 304c, and a name 304d. The properties 304 optionally include one or more icons 304e, one or more labels 304f, and one or more alternative IDs 304g. The inheritance IDs 306 of the node 302 comprise an abstract flag 316, a leaf flag 318, and a root flag 320. The node configuration 314 optionally includes one or more node configuration strategies 322 and one or more node configuration extensions 324. FIG. 3 further shows a plurality of predetermined node types 326 which include a vertex node type 328, an edge node type 330, and an overlay node type 332.

The unique ID 304a is unique for each node within the executable graph-based model 100. The unique ID 304a is used to register, manage, and reference the node 302 within the system (*e.g.*, the overlay system 202). In some embodiments, the one or more alternative IDs 304g are associated with the unique ID 304a to help manage communications and connections with external systems (*e.g.*, during configuration, sending stimuli, or receiving outcomes). The version ID 304b of the node 302 is incremented when the node 302 undergoes transactional change. This allows the historical changes between versions of the node 302 to be tracked by modules or overlays within the overlay system 202. The namespace 304c of the node 302, along with the name 304d of the node 302, is used to help organize nodes within the executable graph-based model 100. That is, the node 302 is assigned a unique name 304d within the namespace 304c such that the name 304d of the node 302 need not be unique within the entire executable graph-based model 100, only within the context of the namespace 304c to which the node 302 is assigned. The node 302 optionally includes one or more icons 304e which are used to provide a visual representation of the node 302 when visualized via a user interface. The one or more icons 304e can include icons at different resolutions and display contexts such that the visualization of the node 302 is adapted to different display settings and contexts. The node 302 also optionally includes one or more labels 304f which are used to override the name 304d when the node 302 is rendered or visualized.

The node 302 supports the concept of inheritance of data and processing logic associated with any other node of the executable graph-based model 100 that is inherited by the node 302. This allows the behavior and functionality of the node 302 to be extended or derived from the inherited node of the executable graph-based model 100. The inheritance IDs 306 of the node 302 indicate the inheritance-based information, which may be applicable to the node 302. The inheritance IDs 306 comprise a set of Boolean flags which identify the inheritance structure of the node 302. The abstract flag 316 allows the node 302 to support the construct of abstraction. When the abstract flag 316 takes a value of 'true', the node 302 is flagged as abstract that is to say that it cannot be instantiated or created within an executable graph-based model (*e.g.,* the executable graph-based model 100). Thus, in an instance when the node 302 has the abstract flag 316 set to 'true', the node 302 may only form the foundation of other nodes that inherit therefrom. By default, the abstract flag 316 of the node 302 is set to 'false'. The leaf flag 318 is used to indicate whether any other node may inherit from the node 302. If the leaf flag 318 is set to 'true', then no other node may inherit from the node 302 (but unlike an abstract node, a node with the leaf flag 318 set may be instantiated and created within the executable graph-based model 100). The root flag 320 is used to indicate whether the node 302 inherits from any other node. If the root flag 320 is set to 'true', the node 302 does not inherit from any other node. The node 302 is flagged as leaf (*e*.*g.,* the leaf flag 318 is set to 'true') and/or root (*e.g.,* the root flag 320 is set to 'true'), or neither (*e.g.*, both the leaf flag 318 and the root flag 320 are set to 'false'). It will be apparent to a person skilled in the art that a node cannot be flagged as both abstract and leaf (*e.g.,* the abstract flag 316 cannot be set to `true' whilst the leaf flag 318 is set to 'true').

As stated above, all elements of the executable graph-based model 100 are defined as nodes. This functionality is in part realized due to the use of a node type. The node type 308 of the node 302 is used to extend the functionality of the node 302. All nodes within the executable graph-based model 100 comprise a node type that defines additional data structures and implements additional executable functionality. A node type thus includes data structures and functionality that are common across all nodes that share that node type. The composition of a node with a node type therefore improves extensibility by allowing the generation of specialized node functionalities for specific application areas. Such extensibility is not present in prior art graph-based models. As illustrated in FIG. 3, the node 302 and the node type 308 are one logical unit that is not separated in the context of an executing system at run-time (*e.g.,* in the context of execution of an executable graph-based model).

FIG. 3 further shows the plurality of predetermined node types 326 which provides a non-exhaustive list of node types that may be associated with a node, such as the node 302. The vertex node type 328 (also referred to as a data node type) includes common data structures and functionality related to the 'things' modeled in the graph (*e.g.,* the data). The edge node type 330 includes common data structures and functionality related to joining two or more nodes. A node having the edge node type 330 may connect two or more nodes and thus the edge node type 330 constructs associations and connections between nodes (for example objects or `things') within the executable graph-based model 100. The edge node type 330 is not restricted to the number of nodes that can be associated or connected by a node having the edge node type 330. The data structures and functionality of the edge node type 330 thus define a hyper-edge which allows two or more nodes to be connected through a defined set of roles. A role defines a connective relationship between the two or more nodes, and hence, allows an edge node to connect two or more nodes such that the two or more nodes may have more than one relationship therebetween. The plurality of predetermined node types 326 further includes the overlay node type 332. As will be described in more detail below, the overlay node type 332 is used to extend the functionality of a node, such as the node 302, to incorporate processing logic.

The one or more attributes 310 correspond to the data associated with the node 302 *(e.g.,* the data represented by the node 302 within the executable graph-based model 100 as handled by the data management module 236). Notably, a node in the executable graph-based model 100 that is not associated with data may not have any attributes. The one or more attributes 310 represent a complex data type. Each attribute of the one or more attributes 310 is composed of an attribute behavior. Attribute behavior may be one of a standard attribute behavior, a reference attribute behavior, a derived attribute behavior, and a complex attribute behavior. The attribute behavior of each attribute defines the behavior of the corresponding attribute. The attribute behaviors of each attribute may be configured by associated attribute configurations. The attribute configurations are examples of attribute configuration extensions which are node configuration extensions (*e.g.*, they are part of the one or more node configuration extensions 324 of the node 302 shown in FIG. 3). The standard attribute behavior may be configured by a standard attribute configuration, the reference attribute behavior may be configured by a reference attribute configuration, the derived attribute behavior is configured by a derived attribute configuration, and the complex attribute behavior is configured by a complex attribute configuration.

The attribute behavior defines the behavior of the corresponding attribute. The standard attribute behavior is a behavior that allows read-write access to the data of the corresponding attribute. The reference attribute behavior is a behavior that allows read-write access to the data of the corresponding attribute but restricts possible values of the data to values defined by a reference data set. The reference attribute configuration associated with reference attribute behavior includes appropriate information to obtain a reference data set of possible values. The derived attribute behavior is a behavior that allows read-only access to data of the corresponding attribute. Also, data of the corresponding attribute is derived from other data, or information, within the executable graph-based model 100 in which an executable node of the corresponding attribute is used. The data is derived from one or more other attributes associated with the node or is derived from more complex expressions depending on the application area. In one embodiment, the derived attribute configuration (which is used to configure the derived attribute behavior) includes mathematical and/or other forms of expressions (*e.g.*, regular expressions, templates, or the like) that are used to derive the data (value) of the corresponding attribute. The complex attribute behavior is a behavior that allows the corresponding attribute to act as either a standard attribute behavior if the data of the corresponding attribute is directly set, or a derived attribute behavior if the data of the corresponding attribute is not directly set.

As shown, the node 302 further includes metadata 312 (*e.g.,* data stored as a name, count of processed messages, time when last message was processed, an average processing time required for processing a message, or the like) which is associated with either the node 302 or an attribute (for example, the one or more attributes 310) of the node 302. An attribute within the one or more attributes 310 may either have an independent or shared state. An independent attribute has data that is not shared with any other node within the executable graph-based model 100. Conversely, a shared attribute has data that is shared with one or more other nodes within the executable graph-based model 100. For example, if two nodes within the executable graph-based model 100 both comprise a shared-data attribute with a value state shared by both nodes, then updating the data (*e.g.,* the value) of this shared attribute will be reflected across both nodes.

The node configuration 314 provides a high degree of configurations for the different elements of the node 302. The node configuration 314 optionally includes the one or more node configuration strategies 322 and/or the one or more node configuration extensions 324 which are complex data types. An example of a concrete node configuration strategy is an ID strategy, associated with the configuration of the unique ID 304a of the node 302, which creates message source IDs. A further example of a concrete node configuration strategy is a versioning strategy, associated with the configuration of the version ID 304b of the node 302, which supports major and minor versioning (depending on the type of transactional change incurred by the node 302). The versioning strategy may be adapted to a native filing system of a user device hosting the overlay system 202 or a third-party data storage (for example, Snowflake^{®}, or the like) associated with the overlay system 202.

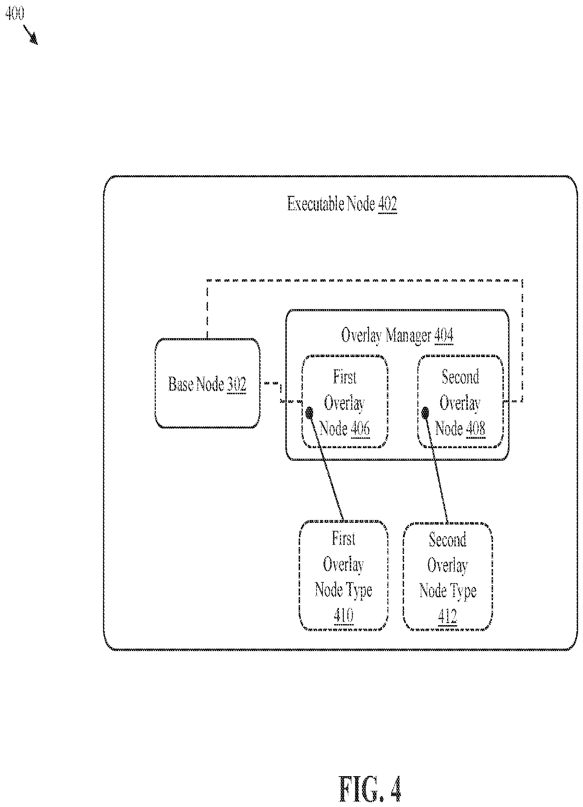

FIG. 4 is a block diagram 400 that illustrates an executable node 402 within the executable graph-based model 100, in accordance with an embodiment of the present disclosure. Referring to FIG. 4, the executable node 402 is shown to include a base node, *e.g.,* the node 302 (hereinafter referred to as the "base node 302") and an overlay manager 404. The overlay manager 404 includes a first overlay node 406 and a second overlay node 408. The executable node 402 provides processing functionality (*e.g.*, processing logic) to the base node 302 via one or more associated overlay nodes (for example, the first and second overlay nodes 406 and 408). Beneficially, the data and processing capability of the base node 302 may be dynamically and significantly extended using the concept of an executable node (for example, the executable node 402).

As shown, the first overlay node 406 has a first overlay node type 410 (for example, a publisher overlay node type) and the second overlay node 408 has a second overlay node type 412 (for example, a handler overlay node type). Although, the executable node 402 is shown to include the first and second overlay nodes 406 and 408, in other embodiments, the executable node 402 may include any number of overlay nodes of a handler overlay type, a publisher overlay type, or any other overlay type.

The executable node 402 extends the base node 302 (or is a subtype of the base node 302) such that all the functionality and properties of the base node 302 are accessible to the executable node 402. The executable node 402 also dynamically extends the functionality of the base node 302 by associating the overlay nodes maintained by the overlay manager 404 with the base node 302. The executable node 402 may thus be considered a composition of the base node 302 and the first and second overlay nodes 406 and 408. The executable node 402 may be alternatively referred to as a node with overlay(s). Therefore, the executable node 402 acts as a decorator of the base node 302 adding the functionality of the overlay manager 404 to the base node 302.

It will be apparent to a person skilled in the art that the base node 302 refers to any suitable node within the executable graph-based model 100. As such, the base node 302 may be a node having a type such as a vertex node type, an edge node type, or the like. Alternatively, the base node 302 may itself be an executable node such that the functionality of the (executable) base node 302 is dynamically extended. In this way, complex and powerful processing functionality can be dynamically generated by associating and extending overlay nodes.

The overlay manager 404 registers and maintains one or more overlay nodes (such as the first overlay node 406 and the second overlay node 408) associated with the base node 302. The assignment of the first and second overlay nodes 406 and 408 to the base node 302 (via the overlay manager 404) endows the base node 302 with processing logic and executable functionality defined within the first and second overlay nodes 406 and 408.

Extending the functionality of a base node through one or more overlay nodes is at the heart of the overlay system 202. As illustrated in FIG. 2, the data (*e.g.*, a vertex node as represented by the base node 302 in FIG. 4) and the functionality that acts upon that data (*e.g.,* an overlay node) can be separated and independently maintained offline, but at run-time, an association between the data node and the overlay node is determined and an executable node is generated (*e.g.,* the executable node 402 shown in FIG. 4).

An overlay node, such as the first overlay node 406 or the second overlay node 408, is a node having an overlay node type (alternatively referred to as an overlay type) assigned to its node type. As shown in FIG. 4, the first overlay node 406 has the first overlay node type 410, *e.g.,* the publisher overlay node type, and the second overlay node 408 has the second overlay node type 408, *e.g.,* the handler overlay node type. In an example, the first overlay node type 410 may be a publisher overlay node type, and the functionality of the base node 302 is extended to generate and publish a message. Further, the second overlay node type 412 may be a handler overlay node type, and the functionality of the base node 302 is extended to subscribe and process a message. It will be apparent to a person skilled in the art that functionalities of the first and second overlay nodes 406 and 408 may be performed by a single overlay node that includes processing logic for subscription, reception, processing, generation, publication, of messages or any other operation associated with in-situ communication using the executable graph-based model 100.

It will be apparent to a person skilled in the art that the list of overlay types is not exhaustive and the number of different overlay types that can be realized is not limited Because an overlay node is itself a node, all functionality of a node described in relation to the base node 302 is thus applicable to an overlay node. For example, an overlay node includes a unique ID, a name, etc., can have attributes (*e.g.,* an overlay node can have its data defined), supports multiple inheritance, and can be configured via node configurations. Furthermore, because an overlay node is a node, the overlay node can have one or more overlay nodes associated therewith (*e.g.,* the overlay node may be an overlay node with an overlay). Moreover, the processing functionality of an overlay node extends to the node type of the node to which the overlay node is applied.

An overlay node, such as the first overlay node 406 or the second overlay node 408, is not bound to a single executable node or a single executable graph-based model (unlike nodes that have non-overlay node types). This allows overlay nodes to be centrally managed and reused across multiple instances of executable graph-based models. Notably, a node (for example, a base node, an executable node, and an overlay node) may be extended by way of overlays. Further, each overlay node may be extended to have one or more overlays. Such overlays may be termed chaining overlays.

Unlike non-overlay nodes, an overlay node includes processing logic (not shown in FIG. 4) which determines the functionality of the overlay node. The processing logic of an overlay node includes a block of executable code, or instructions, which carries out one or more operations associated with the communication of messages within the executable graph-based model 100. The block of executable code is pre-compiled code, code that requires interpretation at run-time, or a combination of both. Different overlay nodes provide different processing logic to realize different functionality. For example, a handler overlay node includes processing logic to receive a message and execute an operation associated with the received message, whilst a publishing overlay node includes processing logic to generate and publish a message based on the stimulus 230 received by the overlay system 202.

The overlay manager 404 of the executable node 402 is responsible for executing all overlays registered therewith. The overlay manager 404 also coordinates the execution of all associated overlay nodes. As shown in FIG. 4, the executable node 402 associates the base node 302 with two overlay nodes that is the first overlay node 406 and the second overlay node 408. Thus, the overlay manager 404 employs a strategy to manage the potentially cascading execution flow. Example strategies to manage the cascading execution of overlays include the visitor pattern and the pipe and filter pattern. Further examples include strategies that apply either depth-first or depth-first processing patterns, a prioritization strategy, or a combination thereof. All execution strategies are defined and registered with the overlay manager 404 and are associated with an overlay via a node configuration extension for the overlay.

It will be appreciated by a person skilled in the art that whilst the present disclosure describes an executable node to be extended by either a handler overlay node or a publisher overlay node, in other embodiments the executable node may be extended by one or more overlay nodes of different types (for example, an encryption overlay node type, an obfuscation overlay node type, an audit overlay node type, an analytics overlay node type, or the like) that may include processing logic to execute different functionality associated with a base node of the executable node. Also, each overlay may be further extended by one or more overlays.

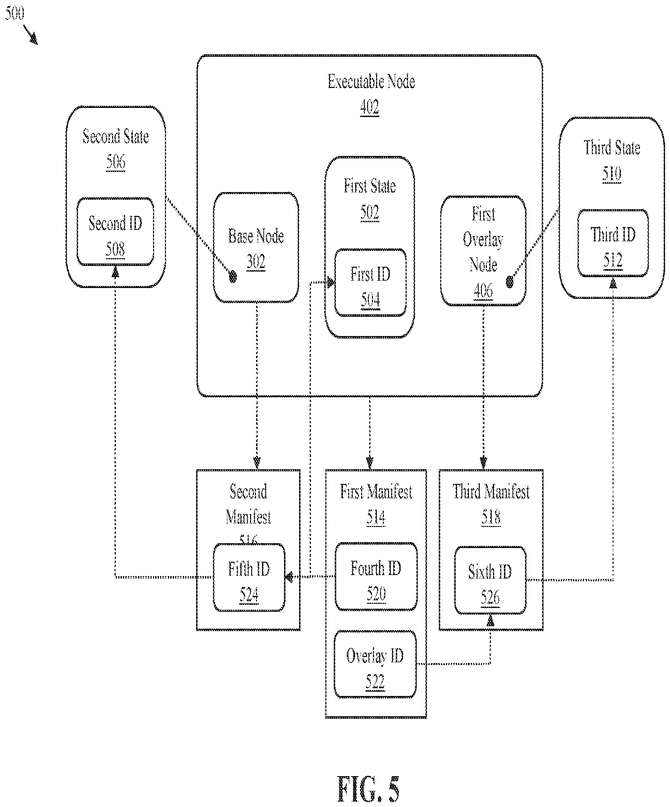

The data and the processing logic associated with one or more overlays of an executable node (for example, the executable node 402) are persistent. The persistent nature of the data and the processing logic are described in detail in conjunction with FIG. 5.

FIG. 5 is a block diagram 500 that illustrates a composition of the executable node 402 that enables persistent storage of data and the processing logic associated therewith, in accordance with an embodiment of the present disclosure.

As described in conjunction with FIG. 4, the executable node 402 includes the base node 302 and one or more overlay nodes (*e.g.,* the first and second overlay nodes 406 and 408). For the brevity of ongoing discussion, the persistent storage is explained for the executable node 402 including only the first overlay node 406. One or more operations performed for ensuring the persistence of the first overlay node 406 may be performed for the second overlay node 408 as well.

Referring to FIG. 5, the executable node 402 includes the base node 302 and the first overlay node 406. The executable node 402 has a corresponding first state 502 having a first ID 504. The base node 302 has a second state 506 having a second ID 508, and the first overlay node 406 has a third state 510 having a third ID 512. A manifest (for example, first through third manifests 514-518) is generated for each of the base node 302, the executable node 402, and the first overlay node 406. In an embodiment, the manifests may be generated by the storage management module 220. The first manifest 514 is associated with the executable node 402 and has a fourth ID 520 and an overlay ID 522. The second manifest 516 is associated with the base node 302 and has a fifth ID 524. The third manifest 518 associated with the first overlay node 406 and has a sixth ID 526. Further, the manifests are stored at respective storage locations that may be centralized or distributed storage locations associated with the overlay system 202. The manifests may be stored by the storage management module 220.

The first state 502 of the executable node 402 includes data required to reconstruct the executable node 402 (e.g., attributes, properties, etc.). The first state 502 of the executable node 402 is persistently stored along with the first ID 504. The first manifest 514 is generated for the executable node 402 and has (i) the fourth ID 520 (which is the same as the first ID 504), (ii) the storage location of the first state 502 of the executable node 402, and (iii) the overlay ID 522 (which is the same as the sixth ID 526). Notably, the fourth ID 520 is the same as the first ID 504 and the fifth ID 524, hence, the first manifest 514 includes the ID of the state of the base node 302 and the executable node 402. Further, the overlay ID 522 is the same as the sixth ID 526 of the state of the first overlay node 406. Therefore, the first manifest 514 may be used to identify and retrieve the states of the base node 302, the executable node 402, and the first overlay node 406. Subsequently, the retrieved states may be used to reconstruct the executable node 402 and the first overlay node 406. In an instance, the executable node 402 may be further extended to include additional overlay nodes. In such an instance, the first manifest 514 may include state IDs of the additional overlay nodes as well. A first manifest state (not shown) is then generated for the first manifest 514 and persistently stored along with the fourth ID 520.

The second state 506 of the base node 302 includes data required to reconstruct the base node 302 (*e.g.,* attributes, properties, etc.) and is persistently stored along with the second ID 508. The second manifest 516 is generated for the base node 302 and has (i) the fifth ID 524 and (ii) the storage location of the second state 506 of the base node 302. The second ID 508 of the second state 506 and the fifth ID 524 of the second manifest 516 are the same as the first ID 504 of the first state 502 of the executable node 402 (which is also the same as the fourth ID 520 of the first manifest 514 of the executable node 402). As mentioned above, along with the first state 502, the first manifest 514 may also be used to identify and retrieve the second manifest 516 which in turn may be used to identify the second state 506 of the base node 302. A second manifest state (not shown) is then generated for the second manifest 516 and persistently stored along with the fifth ID 524. Thus, the states, manifests, and manifest states for the executable node 402 and the base node 302 include the same, shared, ID. A shared ID can be used in this instance because the states, manifests, and manifest states are stored separately. The separate storage of the states, manifests, and manifest states exhibits a distributed architecture of the overlay system 202.

The third state 510 of the first overlay node 406 includes data required to reconstruct the first overlay node 406 (*e.g.,* attributes, properties, processing logic, etc.) and is persistently stored along with the third ID 512. The third manifest 518 is generated for the first overlay node 406 and includes the sixth ID 526, which is the same as the third ID 512. Therefore, the first manifest 514 may be further used to identify and retrieve the third manifest 518 which in turn may be used to identify and retrieve the third state 510 of the first overlay node 406. A third manifest state (not shown) is then generated for the third manifest 518 and is persistently stored along with the sixth ID 526.

In operation, when the executable node 402 is to be loaded, the transaction module 208, in conjunction with the storage management module 220, may execute one or more operations to retrieve the first manifest state stored at a known storage location. Based on the first manifest state, the storage management module 220 may re-construct the first manifest 514 which includes the fourth ID 520 which is the same as the fifth ID 524 of the second manifest 516. Based on the fifth ID 524, the storage management module 220 may identify the second manifest state and may generate the second manifest 516 based on which the second state 506 is identified. Subsequently, the base node 302 is loaded and the storage management module 220 may determine that the base node is a node with overlay. Based on the fourth ID 520 (that is the same as the first ID 504 of the first state 502 of the executable node 402) of the first manifest 514, the first state 502 is identified and retrieved. Subsequently, the executable node 402 is loaded. Moreover, based on the overlay ID 522 (that is the same as the sixth ID 526 of the third manifest 518) of the first manifest 514, the third manifest state is identified and the third manifest 518 is generated. Subsequently, based on the sixth ID 526 (that is the same as the third ID of the third state) of the third manifest 518, the third state 510 is identified and retrieved. Based on the third state 510 the first overlay node 406 is reconstructed and loaded in the executable graph-based model 100.

In some embodiments, the first overlay node 406 may not be loaded in case it is not required for executing the operation associated with the stimulus 230. The loaded executable node 402 and the first overlay node 406 may be unloaded in case they remain unused for a predefined time period whereas one or more executable nodes that are used at least once during the predefined time period may be permanently loaded in the executable graph-based model 100. In some embodiments, the data and processing logic associated with a loaded executable node and/or overlay node may be transferred to a local memory of the overlay system 202 if the data and the processing logic remain unused for a first predefined period of time. Further, the data and the processing logic associated with the executable node/overlay node are transferred to an external storage from the local memory in case the executable node/overlay node remains unused for a second predefined period of time. The second predefined period of time is greater than the first predefined period of time. The term unloading refers to storing a state of a node with a current version of data and processing logic associated therewith at a storage location that is pointed by the corresponding manifest.

An executable graph-based model (for example, the executable graph-based model 100) may be stored (and loaded) using the above-described composition. Beneficially, each component is stored separately thereby allowing a user to maintain and store their data independently of the storage of the structure and functionality of the executable graph-based model 100.

Notably, all manifest states are stored together at a storage location that is known to the storage management module 220. Such centralized storage of the manifest states ensures that node states associated therewith are easily accessible.

It will be apparent to a person skilled in the art that although FIG. 5 illustrates only a single overlay node, in other embodiments, the executable node may include additional or different overlay nodes (for example, the second overlay node 408). It will also be apparent to a person skilled in the art that only those overlay nodes that are required for responding to the stimulus 230 may be loaded.

The overlay system 202 described above may be used to implement systems and methods for in-situ communication of messages using the executable graph-based models (for example, the executable graph-based model 100). In an example, an executable graph-based model is used for facilitating communication among modules of a system (for example, a production pipeline). In such an example, each module of the system may be realized as an executable node and functionality thereof may be extended by way of one or more overlays having processing logic for executing one or more operations associated with corresponding components for communication of messages within the system.

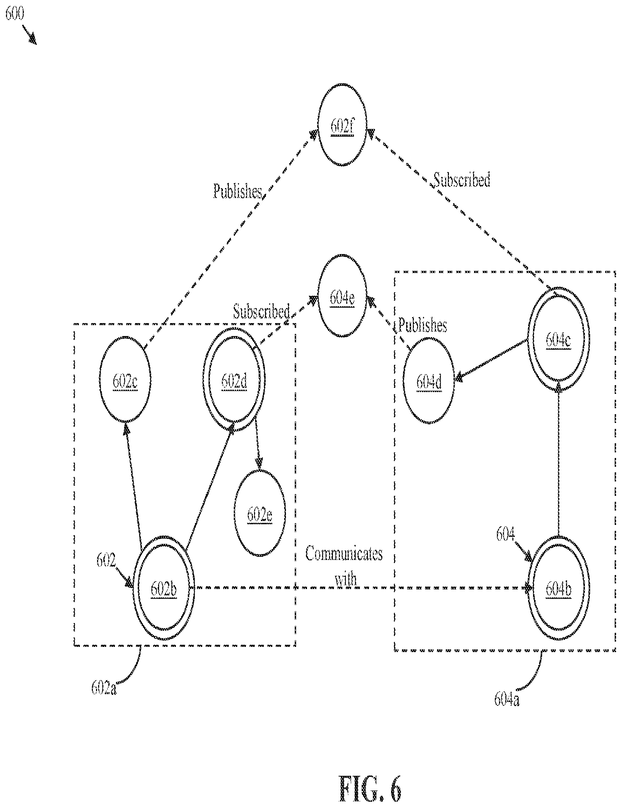

FIG. 6 is a graph 600 that illustrates an implementation of the executable graph-based model 100, in accordance with an embodiment of the present disclosure. Referring to FIG. 6, the executable graph-based model 100 is shown to include a plurality of executable nodes (*e.g.,* a first executable node 602 and a second executable node 604). Each executable node includes a base node and a set of overlay nodes (for example, handler overlay nodes and/or publisher overlay nodes). In an embodiment, the base node of each executable node corresponds to a hyper-edge node or a vertex node. However, in other embodiments, the base node may correspond to any other node type, without deviating from the scope of the present disclosure.

A handler overlay node is a node that includes processing logic for subscribing to one or more messages mapped to the corresponding executable node and processing the subscribed messages in conjunction with the corresponding base node. The handler overlay node being a node adheres to the generic structure of a node described in conjunction with FIG. 3. The term 'subscribe' refers to an operation that is executed by a handler overlay node for receiving a message from another executable node or the message management module 214 of the overlay system 202. A handler overlay node may be a command handler overlay node, a query handler overlay node, or an event handler overlay node. The command handler overlay node may be configured to subscribe to and process the command-type messages. The query handler overlay node may be configured to subscribe to and process the query-type messages. The event handler overlay node may be configured to subscribe and process the event-type messages. A handler overlay node may further include information such as a unique ID associated therewith, a name associated therewith, a category of message that the handler overlay node may subscribe to, and a topic of message that the handler overlay node may subscribe to. Notably, a handler overlay node may subscribe to messages associated with multiple topics. Each topic defines a type of message (for example, analytic-based message, operations-based message, or the like) that may be subscribed by a handler overlay node.

A publisher overlay node is a node that includes processing logic for the generation and publication of one or more messages to be communicated by the corresponding executable node. The publisher overlay node may be an extension of a base node or an overlay node (*e.g.,* a handler overlay node). The publisher overlay node being a node adheres to the generic structure of a node described in conjunction with FIG. 3. In an instance, when the publisher overlay node is an extension of a base node, the publisher overlay node may generate and publish messages that are to be communicated by the corresponding base node. In another instance, when the publisher overlay node is an extension of another overlay node (*e.g.,* a handler overlay node), it may generate and publish messages that are to be communicated by the corresponding handler overlay node based on the processing of a message received thereby. Thus, the messages generated and published by the publisher overlay node are either independent of the processing of messages executed by the handler overlay node or a result of the message processing. A publisher overlay node may be a command publisher overlay node, a query publisher overlay node, or an event publisher overlay node. The command publisher overlay node may be configured to generate and publish the command-type messages. The query publisher overlay node may be configured to generate and publish the query-type messages. The event publisher overlay node may be configured to generate and publish the event-type messages. A publisher overlay node may further include a unique ID and a name associated therewith.

The message management module 214 of the overlay system 202 may receive the stimulus 230 associated with the overlay system 202. The stimulus 230 may correspond to a message that may be the command-type message, the query-type message, or the event-type message. Further, the message that corresponds to the stimulus 230 is received by the message management module 214. The message management module 214 executes the operation associated with the stimulus 230 using one or more handler overlay nodes to which the stimulus 230 may be directed, and one or more base nodes associated with the one or more handler overlay nodes, respectively. In some embodiments, one or more publisher overlay nodes may also be required for executing the operation associated with the stimulus 230. In such cases, the message management module 214 executes the operation associated with the stimulus 230 further based on the one or more publisher overlay nodes. The execution of the operation in response to the stimulus 230 using the executable graph-based model 100 of FIG. 6 is explained in detail below.

As shown in FIG. 6, the first executable node 602 logically includes the base node and overlay nodes (such as overlay nodes) shown within a dotted box 602a. That is to say that the first executable node 602 logically includes a base node 602b, a publisher overlay node 602c, a handler overlay node 602d, and another publisher overlay node 602e. The publisher overlay node 602c and the handler overlay node 602d correspond to overlays of the base node 602b. The publisher overlay node 602e is an overlay of the handler overlay node 602d. Similarly, the second executable node 604 logically includes a base node and overlay nodes shown within another dotted box 604a. The second executable node 604 logically includes a base node 604b, a handler overlay node 604c that is extended by a publisher overlay node 604d. The handler overlay node 604c corresponds to an overlay of the base node 604b, whereas, the publisher overlay node 604d corresponds to an overlay of the handler overlay node 604c. The base nodes 602b and 604b are communicatively coupled and communicate with each other by way of corresponding overlay nodes.

As shown in FIG. 6, the first and second executable nodes 602 and 604 are represented in the executable graph-based model 100 by way of two concentric circles, with the inner circles representing the base nodes 602b and 604b, and outer circles indicating the presence of overlays for extending the functionalities of the base nodes 602b and 604b, respectively. In such a scenario, the association between the base nodes 602b and 604b is represented by an arrow linking the two inner circles. Similarly, some overlay nodes (*e.g.,* the publisher overlay node 602c) are represented in the executable graph-based model 100 by way of single circles as they are not extended further using overlays. In such a scenario, the association of the first executable node 602 with the publisher overlay node 602c is represented by an arrow linking the outer circle of the first executable node 602 to the publisher overlay node 602c. On the other hand, the handler overlay nodes 604c and 602d are represented in the executable graph-based model 100 by way of two concentric circles, with the inner circle representing the corresponding overlay node and the outer circle indicating the presence of overlays. In such a scenario, the association between the second executable node 604 and the handler overlay node 604c is represented by an arrow linking the outer circle of the second executable node 604 to the inner circle of the handler overlay node 604c. Further, the publisher overlay node 604d is represented in the executable graph-based model 100 by way of a single circle, and the association between the handler overlay node 604c and the publisher overlay node 604d is represented by an arrow linking the outer circle of the handler overlay node 604c to the publisher overlay node 604d. Similarly, the association between the first executable node 602 and the handler overlay node 602d is represented by an arrow linking the outer circle of the first executable node 602 to the inner circle of the handler overlay node 602d. Further, the publisher overlay node 602e is represented in the executable graph-based model 100 by way of a single circle, and the association between the handler overlay node 602d and the publisher overlay node 602e is represented by an arrow linking the outer circle of the handler overlay node 602d to the publisher overlay node 602e.

The message management module 214 may receive the stimulus 230. The stimulus 230 may correspond to the command-type message, the query-type message, or the event-type message. The message management module 214 may be configured to execute the operation associated with the stimulus 230 using (i) the handler overlay nodes 604c and 602d, (ii) the publisher overlay nodes 602c and 604d, and (ii) the base nodes 602b and 604b.

The message management module 214 may be configured to communicate the stimulus 230 to a handler overlay node of the first executable node 602. The first executable node 602 may correspond to a brain node (*e.g.,* the main node) of the executable graph-based model 100. The context 226 of the stimulus 230 may include information associated with an intended operation/process/action/event or the like, that is to be executed or realized upon reception of the stimulus 230. In the ongoing description, it is assumed that the stimulus 230 may be directed towards the base node 602b. In such a scenario, the publisher overlay node 602c may generate and publish a message 602f for stimulus processing based on the stimulus 230 and the context 226 associated therewith. The message 602f may be a command-type message, a query-type message, or an event-type message. The first message 602f may include details such as the desired state of a destination node, a previous state of a source node, a current and/or updated state of the source node, the context 226 of the stimulus 230, IDs of intermediate nodes (if any), metadata, or the like.

The handler overlay node 604c of the second executable node 604, to which the stimulus 230 is directed, may be configured to subscribe to the message 602f and process the message 602f in conjunction with the base node 604b. The processing of the message 602f corresponds to the execution of the operation associated with the stimulus 230.

In case the stimulus 230 corresponds to the event-type message, the processing of the message 602f may be the end of the operation and no further action may be initiated.

In case the stimulus 230 corresponds to the command-type message or the query-type message, the publisher overlay node 604d may be configured to generate another message 604e based on the processing of the message 602f, and publish the message 604e.

In one embodiment, the message 604e corresponds to an event-type message. In such a scenario, the message 604e includes at least one of a previous state and an updated state of the second executable node 604, in case the stimulus 230 corresponds to the command-type message. Conversely, in case the stimulus 230 corresponds to the query-type message, the message 604e includes the current state of the second executable node 604. Further, the handler overlay node 602d of the first executable node 602 may be configured to subscribe to the message 604e and process the message 604e. The publisher overlay node 602e may be configured to publish (not shown) an outcome message based on the processing of the message 604e. The message management module 214 may subscribe to the outcome message and generate the outcome 234 for the stimulus 230 based on the outcome message.

In an embodiment, a status of the operation associated with the stimulus 230 is a success, a failure, or a partial failure In case the status of the operation is one of failure and partial failure, the message management module 214 may be further configured to re-execute the operation associated with the stimulus 230. The message management module 214 re-executes the operation for a pre-defined count during a predefined time-interval. The message management module 214 may be further configured to generate an alert in case the status of the operation remains one of the failure and the partial failure after at least one of the execution of the operation for the pre-defined count and a lapse of the predefined time-interval. The predefined time-interval may be less than or equal to a time to live value associated with a message being processed. The outcome of the processing of the stimulus 230 may be presented to a user via a user interface associated with a user device hosting the overlay system 202 as a response to the stimulus 230. Examples of the user device may include, but are not limited to, a cell phone, a tablet, a phablet, a personal computer, a laptop, or the like.

In another embodiment, the message 604e corresponds to a command-type message or a query-type message. In such cases, the message 604e may be subscribed by the first executable node 602 (*e.g.,* the handler overlay node 602d), the second executable node 604 (*e.g.,* a different handler overlay node of the second executable node 604), or a third executable node

(not shown) that is different from the first and second executable nodes 602 and 604. The subscribing executable node may then process the message 604e in a similar manner as described above.

In the present disclosure, data and processing logic are stored separately to ensure segregation and independent control thereof. Therefore, prior to the execution of the operation associated with the stimulus 230, the message management module 214 may be configured to determine all nodes that are required for executing the operation associated with the stimulus 230 and load, in the executable graph-based model 100, nodes, that are currently not loaded, with corresponding data and processing logic. For example, if the first and second executable nodes 602 and 604 are not loaded, the storage management module 220 may be configured to load, in the executable graph-based model 100, the base nodes 602b and 604b, the handler overlay nodes 604c and 602d, and the publisher overlay nodes 604d, 602c, and 602e, with corresponding data and processing logic. Similarly, if only base and handler overlay nodes are required and those are not loaded, the storage management module 220 may be configured to load such nodes in the executable graph-based model 100 with corresponding data and processing logic. Further, if only the base nodes 602b and 604b are loaded, the storage management module 220 may be configured to load, in the executable graph-based model 100, the handler overlay nodes 604c and 602d and the publisher overlay nodes 604d, 602c, and 602e, with corresponding data and processing logic. Multiple combinations may be possible without deviating from the scope of the present disclosure. The loading of the base nodes, publisher overlay nodes, handler overlay nodes, or a combination thereof, is performed as described above in FIG. 5.

Although FIG. 6 describes two executable nodes, the scope of the present disclosure is not limited to it. In various other embodiments, various intermediate nodes may be included between the first and second executable nodes 602 and 604, and the in-situ messaging may be implemented by way of such intermediate nodes.

It will be apparent to a person skilled in the art that operations performed by an executable node or overlays thereof are performed in conjunction with the corresponding base node.

It will also be appreciated by a person skilled in the art that although FIG. 6 illustrates the executable nodes to be extended only by way of handler overlay nodes and publisher overlay nodes, in other embodiments, the executable nodes may further include other overlay nodes such as an encryption overlay node, an obfuscation overlay node, or the like.

It will be apparent to a person skilled in the art that the structure of the executable graph-based model 100 is non-limiting. The structure of the executable graph-based model 100 is dynamic and may be modified based on an input (*e.g.*, internal/external) received by the overlay system 202.

It will also be apparent to a person skilled in the art that FIG. 6 is non-limiting and does not limit the scope of the present disclosure.

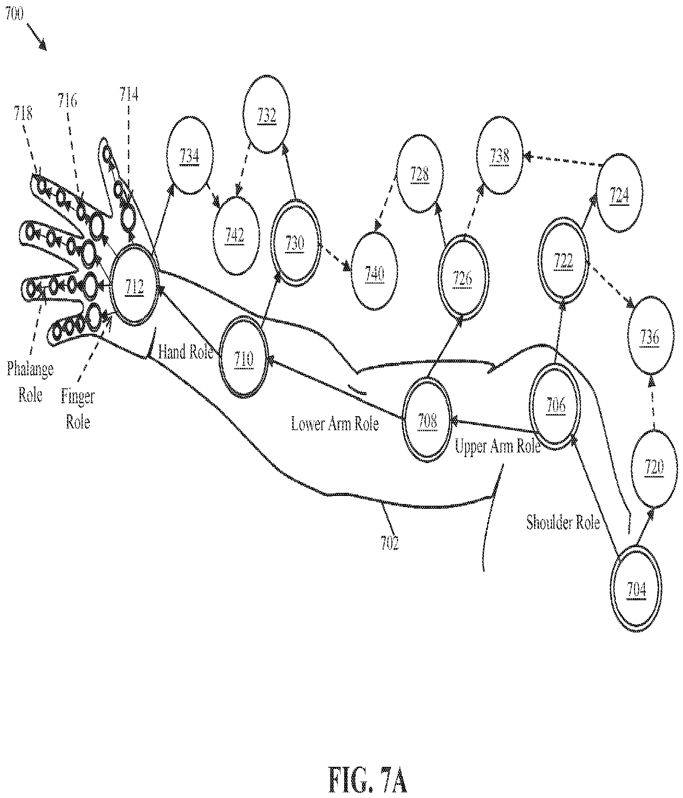

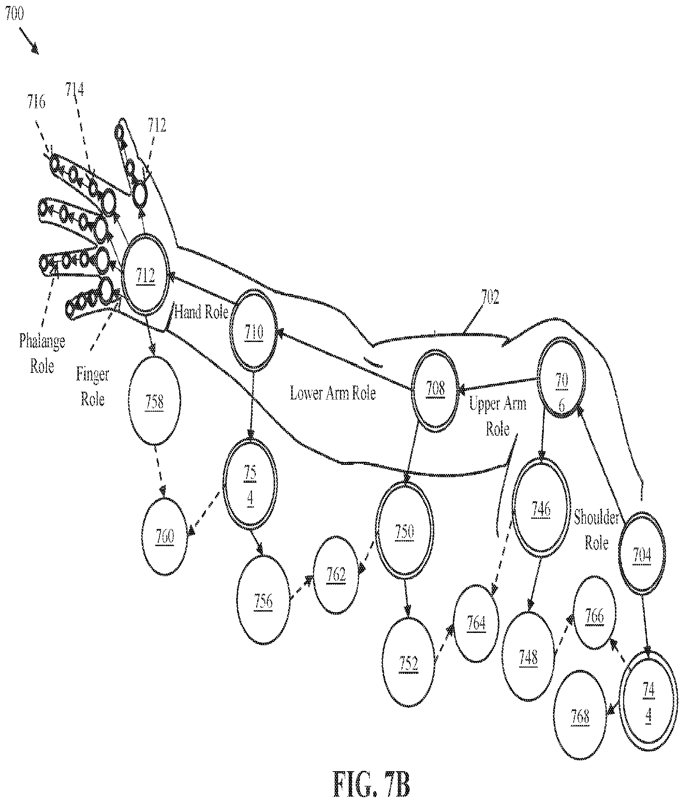

FIGS. 7A and 7B are schematic diagrams that, collectively, illustrate an example implementation of in-situ communication in an executable graph-based robotic arm model 700, in accordance with an embodiment of the present disclosure. Referring to FIGS. 7A and 7B, the executable graph-based robotic arm model 700 corresponds to an executable graph-based model generated for a robotic arm 702, and is hereinafter referred to as the "robotic arm model 700". The robotic arm 702 includes various components such as a brain, a shoulder, an upper arm, a lower arm, a hand, fingers, and phalanges. In such a scenario, the robotic arm model 700 may include various executable nodes that represent the components of the robotic arm 702. Such executable nodes are connected in a hierarchical structure. For example, the brain acts as a root, the shoulder, the upper arm, the lower arm, the hand, the fingers, and some phalanges act as intermediate nodes, and the remaining phalanges act as leaves, of the hierarchical structure of the robotic arm model 700. Roots and intermediate executable nodes of the hierarchical structure have edge node-types, whereas, leaf executable nodes of the hierarchical structure have vertex node-types. Further, the executable nodes are linked by way of executable nodes of role node-types (depicted by way of arrows in FIGS. 7A and 7B). Hereinafter, each node with the edge node-type is referred to as an edge, each node with the vertex node-type is referred to as a vertex, and each node with the role node-type is referred to as a role.

As shown in FIGS. 7A and 7B, an executable graph-based model (*e.g.,* the robotic arm model 700) generated for the robotic arm 702 includes a brain edge 704, a shoulder edge 706, an upper arm edge 708, a lower arm edge 710, a hand edge 712, and a plurality of finger edges (for example, a finger edge 714) that represent the brain, the shoulder, the upper arm, the lower arm, the hand, and the fingers of the robotic arm 702, respectively. The robotic arm model 700 further includes a plurality of phalange edges (for example, a phalange edge 716) and a plurality of phalange vertices (for example, a phalange vertex 718) that represent phalanges of the robotic arm 702. Phalanges that represent intermediate nodes of the hierarchical structure are edges, whereas, phalanges that represent leaf nodes of the hierarchical structure are vertices. The brain edge 704 and the shoulder edge 706 are linked by way of a shoulder role. The shoulder edge 706 and the upper arm edge 708 are linked by way of an upper arm role, whereas, the upper arm edge 708 and the lower arm edge 710 are linked by way of a lower arm role. Similarly, the lower arm edge 710 and the hand edge 712 are linked by way of a hand role. Further, the hand edge 712 is linked with each finger edge by way of a finger role. Each finger edge is associated with an adjacent phalange edge by way of a phalange role, two phalange edges are associated with each other by way of corresponding phalange roles, and a phalange edge and a phalange vertex are associated with each other by way of a phalange role. The vertices, edges, and role nodes of the robotic arm model 700, collectively, enable movement of the robotic arm 702. Hence, timely and proper communication among the nodes of the robotic arm model 700 becomes crucial for ensuring seamless operation of the robotic arm 702.

Referring to FIG. 7A, the brain edge 704 is extended to have a corresponding publisher overlay node 720. The shoulder edge 706 is extended to have a corresponding handler overlay node 722, which is then further extended to have a publisher overlay node 724. The upper arm edge 708 is extended to have a handler overlay node 726 which is extended to have a publisher overlay node 728. The lower arm edge 710 is extended to have a handler overlay node 730 which is then further extended to have a publisher overlay node 732. Further, the hand edge 712 is extended to have a handler overlay node 734. Various nodes of the robotic arm model 700 work in tandem to communicate messages. Such messages may be command-type messages, query-type messages, or event-type messages. The command-type messages are generated and published by command-type publisher overlay nodes, whereas, the command-type messages are subscribed and processed by command-type handler overlay nodes. Further, the query-type messages are generated and published by query-type publisher overlay nodes, whereas, the query-type messages are subscribed and processed by query-type handler overlay nodes. Similarly, the event-type messages are generated and published by event-type publisher overlay nodes, whereas, the event-type messages are subscribed and processed by event-type handler overlay nodes.

Notably, nodes that are required to generate and publish the command-type messages must be extended to have the command-type publisher overlay nodes. Nodes that are required to generate and publish the query-type messages must be extended to have the query-type publisher overlay nodes. Nodes that are required to generate and publish the event-type messages must be extended to have the event-type publisher overlay nodes. Similarly, nodes that are required to subscribe and process the command-type messages must be extended to have the command-type handler overlay nodes. Nodes that are required to subscribe and process the query-type messages must be extended to have the query-type handler overlay nodes. Nodes that are required to subscribe and process the event-type messages must be extended to have the event-type handler overlay nodes.

Referring to the robotic arm model 700, the brain edge 704 may correspond to a computing unit (for example, a controller, a microprocessor, or the like) of the robotic arm 702 that communicates with the message management module 214 of the overlay system 202. The brain edge 704 receives a stimulus (*e.g.*, the stimulus 230) from the message management module 214. Based on the received stimulus 230, the publisher overlay node 720 of the brain edge 704 may generate a message 736 and publish the message 736. The message 736 may be indicative of the context 226 and the stimulus 230. The message 736 may include IDs associated with zero or more intermediate nodes (*e.g.*, edge nodes or vertex nodes) as well as a destination node. The message 736 may be directed to one or more destination nodes that may be responsible for the execution of an operation associated with the stimulus 230. The message 736 may be communicated via zero or more intermediate nodes that may connect the destination node to the publisher overlay node 720. The intermediate nodes, collectively, form a communication channel between the publisher overlay node 720 and the destination node. In the ongoing example, the shoulder edge 706, the upper arm edge 708, and the lower arm edge 710 act as intermediate nodes, and the hand edge 712 acts as the destination node.

Thus, the handler overlay node 722 of the shoulder edge 706 subscribes to the message 736. The message 736 may include a plurality of sub-messages, one for each node that is part of the in-situ messaging. Thus, in the aforementioned example, the message 736 may include first through fourth sets of sub-messages mapped to the shoulder edge 706, the upper arm edge 708, the lower arm edge 710, and the hand edge 712, respectively. The handler overlay node 722 may thus process the first set of sub-messages mapped to the shoulder edge 706 (*e.g.,* an executable node associated with the shoulder edge 706). The handler overlay node 722 may process the first set of sub-messages in conjunction with the corresponding base node (*e.g.,* the shoulder edge 706).

A result of the processing of the first set of sub-messages may be a success, a failure, or a partial failure In case the processing of the first set of sub-messages fails, a publisher overlay node (different from the publisher overlay node 724) of the shoulder edge 706 may be further configured to generate and publish a failure event and a partial failure event, where the failure event and the partial failure event are subscribed by the publisher nodes of the brain edge 704 (*e.g.,* the executable node associated with the brain edge 704).

Based on the successful (or partial failure/success, in some scenarios) processing of the first set of sub-messages, the publisher overlay node 724 of the shoulder edge 706 may generate a message 738 and publish the message 738. In such a scenario, the message 738 may include remaining sub-messages (*e.g.,* the second through fourth sets of sub-messages) or a modified version of the message 736 based on the processing of the first set of sub-messages. In an embodiment, the modified version of the message 736 includes the third and fourth sets of sub-messages and a modified version of the second set of sub-messages. In some embodiments, the generation of the message 738 may be independent of the processing of the first set of sub-messages. In some embodiments, the message 738 may be generated based on a result of the processing of the first set of sub-messages. In some embodiments, the message 738 may be generated by modifying (by executing operations such as truncation, modification, encryption, decryption, or the like) the message 736.

The message 738 may be subscribed by the handler overlay node 726 of the upper arm edge 708. The handler overlay node 726 may receive and process the corresponding set of sub-messages in conjunction with the upper arm edge 708. The publisher overlay node 728 of the handler overlay node 726 may then generate a message 740 which may be subscribed by the handler overlay node 730 of the lower arm edge 710. The handler overlay node 730 may receive and process the corresponding set of sub-messages in conjunction with the lower arm edge 710, and the publisher overlay node 732 may generate and publish a message 742. The upper arm edge 708, the lower arm edge 710, and associated handler and publisher overlay nodes, thus correspond to intermediate executable nodes hierarchically associated with the shoulder edge 706 (*e.g.,* the executable node associated with the shoulder edge 706), and are configured to generate and publish the message 742 based on the hierarchical processing of the message 738.

The handler overlay node 734 of the hand edge 712 may be configured to subscribe to the message 742. The entire message 742 is mapped to the hand edge 712, as the hand edge 712 is the destination node. Thus, the handler overlay node 734 may be configured to process the message 742 in conjunction with the hand edge 712. The processing of the message 742 corresponds to the execution of the operation associated with the stimulus 230.

In operation, the brain edge 704 may receive the stimulus 230 that is a command-type message. The stimulus 230 may be indicative of an instruction to wave the hand of the robotic arm 702. Based on the stimulus 230, the publisher overlay node 720 may generate and publish the message 736 that may be a command-type message for the hand of the robotic arm 702 to wave. Further, the message 736 may be communicated in a hierarchical manner through the executable nodes 706-712, and at each intermediate node, a corresponding intermediate message may be generated. At the hand edge 712, an operation of moving the hand from a first position to a second position in a to-and-fro direction may be executed based on the message 742 subscribed from the publisher overlay node 732. The to-and-fro movement of the hand may result in the waving of the hand in response to the stimulus 230. In some embodiments, the brain edge 704 may further communicate a corrective message to the hand edge 712 in an asynchronous (in a hierarchical manner) or a synchronous manner (directly to the hand edge 712) in case the operation executed for performing the movement of the hand is incorrect. The brain edge 704 may communicate the corrective message based on the reception of an event-type message that is indicative of a failure or partial failure of the processing of the stimulus 230.

Although, the messages being communicated in the description of FIG. 7A are command-type messages, the scope of the description is not limited thereby. In other embodiments, the messages being communicated may be query-type messages or event-type messages.

In case the stimulus 230 corresponds to the event-type message, the processing of the message 742 may be the end of the operation and no further action may be initiated. Conversely, in case the stimulus 230 corresponds to a command-type message or a query-type message, the execution of the operation associated with the stimulus 230 may result in the generation of various other messages. FIG. 7B provides a detailed description of the generation and communication of such messages. These messages may be utilized for the generation of the outcome 234 to the stimulus 230.

Referring now to FIG. 7B, as shown, the brain edge 704 is further extended to have a handler overlay node 744. The shoulder edge 706 is further extended to have a handler overlay node 746 that is further extended to have a publisher overlay node 748. The upper arm edge 708 is extended to have a handler overlay node 750 which is further extended to have a publisher overlay node 752. The lower arm edge 710 is extended to have a handler overlay node 754 which is further extended to have a publisher overlay node 756. The hand edge 712 is extended to have a publisher overlay node 758.

The publisher overlay node 758 of the hand edge 712 may be configured to generate a message 760 based on the processing of the message 742, and publish the message 760. In an embodiment, the message 760 is an event-type message. Therefore, the publisher overlay nodes and the handler overlay nodes shown in FIG. 7B are assumed to be the event publisher overlay nodes and event handler overlay nodes, respectively. The message 760 may include an event or a status (success/failure) of the event. In an instance, when the stimulus 230 is the command-type message, the message 760 may include at least one of a previous state and an updated state of the hand edge 712 (*e.g.,* the executable node that includes a base node of the hand edge 712) that has executed the operation associated with the stimulus 230. Additionally, the message 760 may include at least one of a previous state and an updated state of each executable node that is involved in the communication and execution of the stimulus 230. In another instance, when the stimulus 230 is the query-type message, the message 760 may include a current status of the hand edge 712, and optionally, each executable node that processes at least one sub-message. Subsequently, the message 760 or a copy of the message 760 is received by each handler overlay node that has subscribed to the event. The message 760 is communicated as the response to the stimulus 230.

The message 760, while being communicated, passes through an identical set of intermediate nodes to reach the corresponding destination which may be a source executable node of the stimulus 230. The communication of the message 760 from the hand edge 712 to the brain edge 704 takes place as described in FIG. 7B. That is to say that the message 760 may be subscribed by the handler overlay node 754 of the lower arm edge 710. The message 760 may be processed by the handler overlay node 754 in conjunction with the lower arm edge 710. The publisher overlay node 756 may then generate a message 762 based on the processing of the message 760. At the lower arm edge 710, the processing of the third set of sub-messages results in the generation of a fifth set of sub-messages (*e.g.*, a first set of sub-events). Thus, the message 762 is generated as an aggregation of the fifth set of sub-messages and the message 760.

The handler overlay node 750 of the upper arm edge 708 may be configured to subscribe to the message 762 and process the message 762 in conjunction with the upper arm edge 708. The publisher overlay node 752 of the upper arm edge 708 may be configured to generate and publish a message 764 based on the processing of the message 762. At the upper arm edge 708, the processing of the second set of sub-messages results in the generation of a sixth set of sub-messages (*e.g.*, a second set of sub-events). Thus, the message 764 is generated as an aggregation of the sixth set of sub-messages and the message 762. The intermediate executable nodes (*e.g.*, the lower arm edge 710 and the upper arm edge 708, and associated handler and publisher overlay nodes) are thus configured to generate and publish the message 764 (*e.g.,* an event) based on the hierarchical processing of the message 760.

The handler overlay node 746 of the shoulder edge 706 may be configured to subscribe to message 764 and process the message 764 in conjunction with the shoulder edge 706. The publisher overlay node 748 of the shoulder edge 706 may be configured to generate a message 766 based on the processing of the message 764. At the shoulder edge 706, the processing of the first set of sub-messages results in the generation of a seventh set of sub-messages (*e.g.*, a third set of sub-events). Thus, the message 766 is generated as an aggregation of the seventh set of sub-messages and the message 764.

The handler overlay node 744 of the brain edge 704 may be configured to subscribe to the message 766 and process the message 766. The handler overlay node 744 of the brain edge 704 may be further extended to have a publisher overlay node 768. The publisher overlay node 768 may be configured to publish the message 766 (the publish operation is not shown in FIG. 7B). The message management module 214 may subscribe to the message 766 and generate the outcome 234 for the stimulus 230 based on the message 766.

The communication of the event response from the hand edge 712 to the brain edge 704 is not limited to that described above. In other embodiments, the publisher overlay node 758 of the hand edge 712 may be configured to generate the message 760 based on the processing of the message 742 and publish the message 760. The handler overlay node 744 of the brain edge 704 may be configured to subscribe to the message 760 and process the message 760. In such a scenario, the message 760 includes at least one of a previous state and an updated state of the hand edge 712 (*e.g.,* the executable node associated with the hand edge 712), in case the stimulus 230 corresponds to the command-type message. Further, in case the stimulus 230 corresponds to the query-type message, the message 760 includes a current state of the hand edge 712 (*e.g.,* the executable node associated with the hand edge 712). Further, the publisher overlay node 768 may be configured to publish the message 760.

Although it is described that the publisher overlay node 758 of the hand edge 712 generates an event-type message 760, the scope of the present disclosure is not limited to it. In other embodiments, the publisher overlay node 758 of the hand edge 712 may be configured to generate a command-type message or a query-type message based on the processing of the message 742 and publish the generated message. The generated message may be processed in a manner similar to the message 760, without deviating from the scope of the present disclosure.

In some embodiments, the stimulus 230 may be directed to the plurality of finger edges and/or the plurality of phalange edges. In such embodiments, the hand edge 712 may be extended to have a publisher overlay node and may publish an intermediate message that may be subscribed by handler overlay nodes of the plurality of fingers. The intermediate message may be communicated, as described in conjunction with FIG. 7A, to the plurality of phalange vertices. Subsequently, the operation associated with the stimulus 230 that causes an intended event to occur is executed by the plurality of fingers and/or the plurality of phalanges. Subsequently, the event status is communicated to the hand edge 712 by the plurality of phalanges and/or the plurality of fingers as described in conjunction with FIG. 7B. A handler overlay node (not shown) of the hand edge 712 may subscribe to the event status communicated by the plurality of fingers and/or the plurality of phalanges. The publisher overlay node 758 may aggregate the event status received from each of the plurality of fingers and/or the plurality of phalanges to generate the corresponding event-type message (not shown). Subsequently, the event-type message may be communicated to the brain edge 704 in the similar manner as described above. In some embodiments, the publisher overlay node 758 may generate and publish another event-type message in response to failure or partial failure of the processing of the stimulus 230.

In some embodiments, the robotic arm model 700 may further include a joint node (not shown). The joint node may be extended to have one or more overlays that include processing logic for facilitating movements (for example, roll, pitch, and yaw) of the robotic arm 702 and the degree of freedom associated with such movements. Further, the joint node may also have data required for such movements. In such embodiments, one or more nodes (for example, the shoulder edge 706, the upper arm edge 708, and the lower arm edge 710) of the robotic arm model 700 that require the processing logic and/or data associated with the joint node may inherit the joint node thereby inheriting the overlays and data associated therewith.

FIGS. 7A and 7B describe that the communication of messages includes movement of messages along the hierarchical structure of the nodes of the robotic arm model 700. In other embodiments, the messages may be directly communicated to corresponding destination node(s). Such communication of messages may occur in instances when the message is high-priority or time-critical.

For the sake of brevity, FIGS. 7A and 7B describe the communication of a single message. In some embodiments, multiple messages may be communicated simultaneously. In such embodiments, communication and processing of the messages may be scheduled and optimized based on various algorithms known in the art such as First Come First Serve (FCFS), Shortest Job First (SJF), Round Robin, Priority Scheduling, or the like. The abovementioned scheduling may further involve serial or parallel and synchronous or asynchronous execution of the messages.

It will be apparent to a person skilled in the art that the structure of the robotic arm model 700 shown in FIGS. 7A and 7B are exemplary and do not limit the scope of the present disclosure.

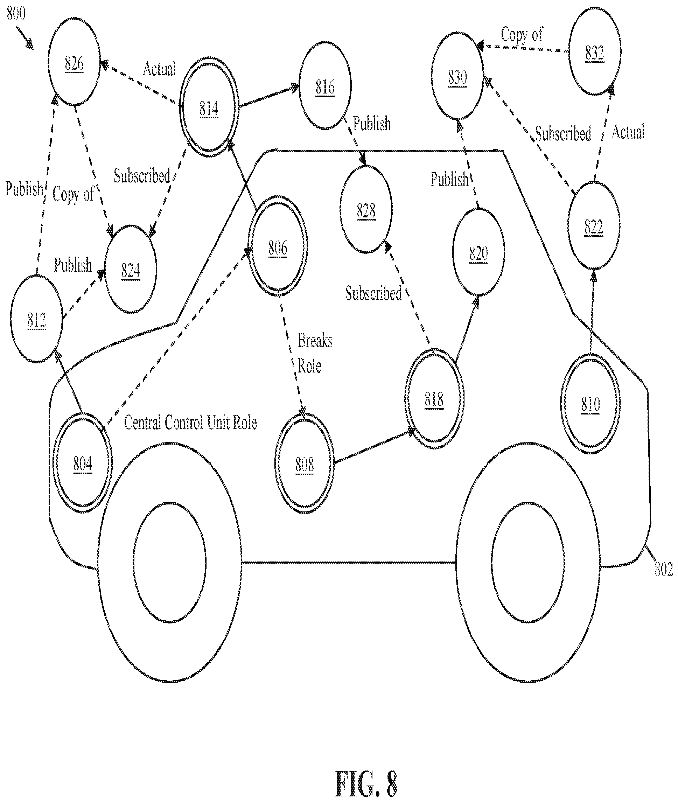

FIG. 8 is a schematic diagram that illustrates another example implementation of in-situ communication in an executable graph-based autonomous vehicle model 800, in accordance with another embodiment of the present disclosure. Referring to FIG. 8, the executable graph-based autonomous vehicle model 800 corresponds to an executable graph-based model generated for an autonomous vehicle 802 and is hereinafter referred to as the "autonomous vehicle model 800". The autonomous vehicle 802 includes various components such as a proximity sensor, an electronic control unit, an automatic brake, and an automatic door lock/unlock. In such a scenario, the autonomous vehicle model 800 may include various executable nodes that represent the components of the autonomous vehicle 802. Such executable nodes are connected in a hierarchical structure. The executable nodes in the autonomous vehicle model 800 are edge-type nodes and are referred to as edges. Edges are linked by way of role-type nodes that are referred to as roles.

As shown in FIG. 8, an executable graph-based model (*e.g.,* the autonomous vehicle model 800) generated for the autonomous vehicle 802 thus includes a proximity sensor edge 804, an electronic control unit edge 806, an automatic brake edge 808, and an automatic door lock/unlock edge 810. The proximity sensor edge 804 is associated with the electronic control unit edge 806 by way of a central control unit role. The electronic control unit edge 806 is associated with the automatic brake edge 808 by way of a brakes role. The proximity sensor edge 804 is extended to include a publisher overlay node 812. The electronic control unit edge 806 is extended to include a handler overlay node 814 which is further extended to include a publisher overlay node 816. The automatic brake edge 808 is extended to include a handler overlay node 818 which is further extended to include a publisher overlay node 820. The automatic door lock/unlock edge 810 is extended to include a handler overlay node 822. Various components of the autonomous vehicle model 800 work in tandem to facilitate communication among various components of the autonomous vehicle 802.

In an instance, the autonomous vehicle 802 may be in motion and the proximity sensor may detect proximity with another object. In such an instance, the publisher overlay node 812 of the proximity sensor edge 804 may generate a message 824. The message 824 may be an event-type message and may be indicative of an event of close proximity to another object while in motion. The message 824 may be subscribed by the handler overlay node 814 of the electronic control unit edge 806. Therefore, a message 826 that is a copy of the message 824 may be generated and published by the publisher overlay node 812 and received by the handler overlay node 814. The handler overlay node 814 may process the message 826 and the publisher overlay node 816 may generate and publish a message 828 that may be subscribed by the handler overlay node 818 of the automatic brake edge 808. The handler overlay node 818 may process the message 828 and based on the processing may execute an operation that causes an application of emergency brakes to the autonomous vehicle 802. Subsequently, the publisher overlay node 820 of the handler overlay node 818 may generate and publish a message 830 that may be an event-type message and may be indicative of a successful application of emergency brakes. Subsequently, the message management module 214 may cause the publisher overlay node 820 to generate and publish a message 832 that is a cloned copy of the message 830. The message 830 may be subscribed by the handler overlay node 822 of the automatic door lock/unlock edge 810. Therefore, the handler overlay node 822 may receive and process the message 832 and may execute an operation of unlocking doors of the autonomous vehicle 802 that may have been locked while the autonomous vehicle 802 was in motion. The event indicated by the message 830 may be indicative of an emergency hence, unlocking the doors is a safety measure taken to ensure the safety of passengers of the autonomous vehicle 802.

It will be apparent to a person skilled in the art that the automatic door lock/unlock edge 810 is not coupled to any of the proximity sensor edge 804, the electronic control unit edge 806, and the automatic brake edge 808. The automatic door lock/unlock edge 810 may be an executable node of a sub-graph of the autonomous vehicle model 800.

It will be apparent to a person skilled in the art that in different embodiments, the autonomous vehicle 802 may include additional or different components configured to perform similar or dissimilar operations. Such components may be implemented in the executable graph-based autonomous vehicle model 800 and may communicate as described throughout the present disclosure.

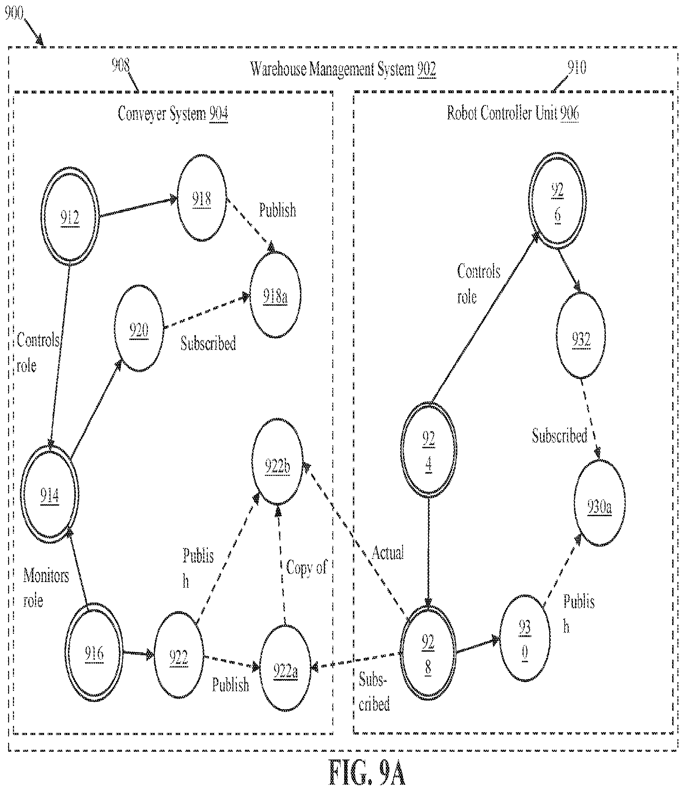

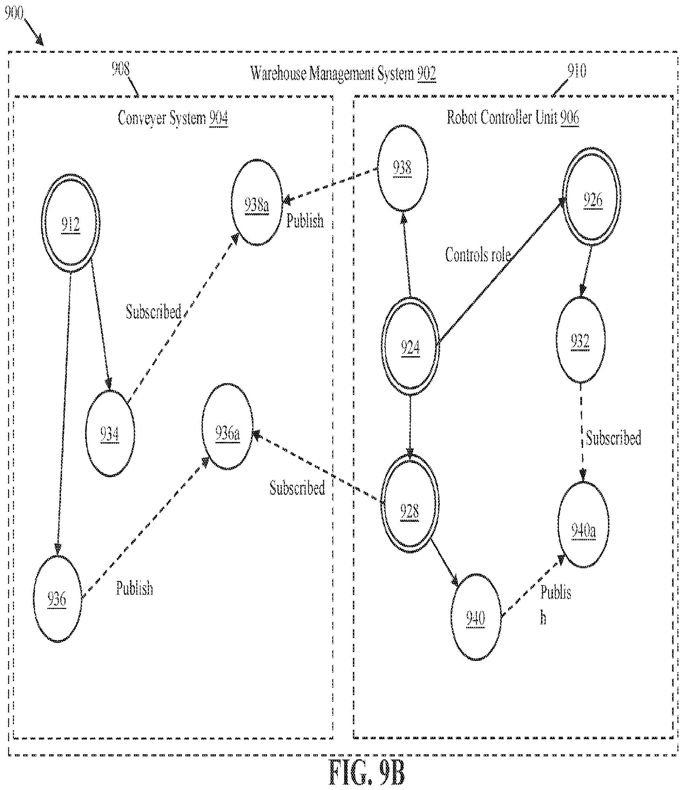

It will be apparent to a person skilled in the art that applications of the disclosed systems and methods for facilitating in-situ communication using graph-based models may be in various other domains. One such other domain may be automated warehouse management which is described in FIGS. 9A and 9B.

FIGS. 9A and 9B are schematic diagrams that, collectively, illustrate yet another example implementation of in-situ communication in an executable graph-based warehouse management model 900, in accordance with yet another embodiment of the present disclosure. Referring to FIGS. 9A and 9B, the executable graph-based warehouse management model 900 corresponds to an executable graph-based model generated for a warehouse management system 902. The warehouse management system 902 is shown to include a first sub-system which is a conveyor system 904 and a second sub-system which is a robot controller unit 906.

Referring to FIG. 9A, the conveyor system 904 includes various components such as a conveyor control unit, a rotor, and a sensor. The robot controller unit 906 includes various components such as a centralized robot controller unit and one or more robots. In such a scenario the executable graph-based warehouse management model 900 may be a combination of (i) a first sub-graph that is an executable graph-based conveyor model 908 and corresponds to the conveyor system 904 and (ii) a second sub-graph that is an executable graph-based robot controller model 910 and corresponds to the robot controller unit 906.

As shown, the executable graph-based conveyor model 908 includes an edge-type node for each component of the conveyor system 904. Thus, the executable graph-based conveyor model 908 includes a conveyor controller unit edge 912, a rotor edge 914, and a sensor edge 916. Two edges may be linked by way of a role node (shown by way of arrows in FIG. 9A). The conveyor controller unit edge 912 and the rotor edge 914 are linked by way of a controls role, and the rotor edge 914 and the sensor edge 916 are linked by way of a monitors role. The conveyor controller unit edge 912 is extended to include a publisher overlay node 918, whereas, the rotor edge 914 is extended to include a handler overlay node 920. The sensor edge 916 is extended to include a publisher overlay node 922. The executable graph-based robot controller model 910 includes a centralized robot controller unit edge 924 and a robot edge 926. The centralized robot controller unit edge 924 and the robot edge 926 are linked by way of a controls role. The centralized robot controller unit edge 924 is extended to include a handler overlay node 928 which is further extended to include a publisher overlay node 930. The robot edge 926 is extended to include a handler overlay node 932.

In operation, the conveyor controller unit edge 912 receives a stimulus from the message management module 214 regarding the halting of rotation of the rotor. The publisher overlay node 918 of the conveyor controller unit edge 912 generates a command-type message 918a that includes an instruction for the rotor to halt the rotation. The publisher overlay 918 publishes the command-type message 918a that is subscribed by the handler overlay node 920 of the rotor edge 914. The handler overlay node 920 may process the command-type message 918a and execute an operation (*e.g.,* command) to halt the rotor. The execution of the command for the halting of the rotor results in a halt in the movement of a conveyor belt associated with the rotor. Consequently, the sensor edge 916 may detect the halt in the movement of the rotor and the conveyor belt. Notably, the halting of the conveyor belt may be indicative of the fact that objects being transferred by the conveyor belt have reached a pick/put station (not shown) in the warehouse. Subsequently, the publisher overlay node 922 of the sensor edge 916 publishes an event-type message 922a indicative of the halting of the conveyor belt. The event-type message 922a is subscribed by the handler overlay node 928 of the centralized robot controller unit edge 924. Therefore, the publisher overlay node 922 generates and publishes a message 922b which is a cloned copy of the event-type message 922a that is subscribed by the handler overlay node 928 of the centralized robot controller unit edge 924. The message management module 214 may cause the publisher overlay node 922 to create the cloned copy (*e.g.*, the message 922b) of the message 922a. The handler overlay node 928 receives and processes the cloned copy of the event-type message 922a. The publisher overlay node 930 of the handler overlay node 928 may then generate and publish a command-type message 930a. The command-type message 930a may include an instruction that may cause the robot to move objects at the pick/put station to a storage area of the warehouse. The command-type message 930a is subscribed and received by the handler overlay node 932 of the robot edge 926. The handler overlay node 932 may process the command-type message 930a by executing one or more operations in conjunction with the robot edge for transferring the objects at the pick/put station to the storage area where the one or more operations may be performed by the one or more robots associated with the centralized robot controller unit.

Referring now to FIG. 9B, the conveyor controller unit edge 912 is further extended to include a handler overlay node 934 and another publisher overlay node 936. The centralized robot controller unit edge 924 is further extended to include a publisher overlay node 938 and the handler overlay node 928 is extended to include a publisher overlay node 940.

In an instance, the publisher overlay node 938 may generate and publish a query-type message 938a. The query-type message 938a may query a status (running or halted) of the conveyor from the conveyor controller unit edge 912. The query-type message 938a is subscribed and received by the handler overlay node 934. The handler overlay node 934 may process the query-type message 938a. The publisher overlay node 936 may generate and publish a query response 936a based on the processing of the query-type message 938a. The query response 936a may include a current status of the conveyor that is assumed herein to be halted. The query response 936a may be subscribed and received by the handler overlay node 928 which may process the query response 936a. The publisher overlay node 940 may generate and publish a command-type message 940a based on the processing of the query response 936a. The command-type message includes an instruction to the robot edge 926 to execute an operation of moving the objects from the pick/put station to the storage area. The handler overlay node 932 may subscribe and receive the command-type message 940a. The handler overlay node 932 may process the command-type message 940a by executing one or more operations to cause the one or more robots to move the objects at the pick/put station to the storage area.

It will be apparent to a person skilled in the art that throughout the description of FIGS. 9A and 9B, a publisher overlay node that publishes a command-type message is a command publisher overlay node, a publisher overlay node that publishes a query-type message is a query publisher overlay node, and a publisher overlay node that publishes an event-type message is an event publisher overlay node. Similarly, in FIGS. 9A and 9B, a handler overlay node that subscribes to a command-type message is a command handler overlay node, a handler overlay node that subscribes to a query-type message is a query handler overlay node, and a handler overlay node that subscribes to an event-type message is an event handler overlay node.

It will be apparent to a person skilled in the art that FIGS. 9A and 9B are exemplary and do not limit the scope of the present disclosure.

FIG. 10 is a block diagram 1000 that illustrates the message management module 214 of the overlay system 202, in accordance with an embodiment of the present disclosure. The message management module 214 is shown to include a command registry and repository 1002, a command event registry and repository 1004, a query registry and repository 1006, and a query event registry and repository 1008. The command registry and repository 1002 is associated with a command queue manager 1010, and the command event registry and repository 1004 is associated with a command event queue manager 1012. The query registry and repository 1006 is associated with a query queue manager 1014, and the query event registry and repository 1008 is associated with a query event queue manager 1016.

Each message that is to be communicated must be registered with a registry associated with a type of the message. For example, a command-type message is registered with the command registry and repository 1002, an event-type message that is generated in response to a command-type message is registered with the command event registry and repository 1004, a query-type message is registered with the query registry and repository 1006, and another event-type message that is generated in response to a query-type message is registered with the query event registry and repository 1008. Once registered, each message is stored in the corresponding registry and repository. For example, each command-type message is stored in the command registry and repository 1002. The command registry and repository 1002, the command event registry and repository 1004, the query registry and repository 1006, and the query event registry and repository 1008 are permanent storages (*e.g.*, secondary memory) managed by the memory management module 218.

Each handler overlay node of the executable graph-based model 100 is also registered with a corresponding registry and repository. For example, a command handler overlay node is registered with the command registry and repository 1002, a query handler overlay node is registered with the query registry and repository 1006, and an event handler overlay node is registered with the command event registry and repository 1004 and the query event registry and repository 1008. The message management module 214 is configured to map each registered message to a handler overlay node that is responsible for processing thereof. Based on the mapping of the messages and handler overlay nodes, the message management module 214 may initiate a queue for each topic or type of message. For example, a first queue for command-type messages, a second queue for query-type messages, and a third queue for event-type messages. Notably, a command-type message and a query-type message may be subscribed and processed by a single corresponding handler overlay node whereas an event-type message may be subscribed and processed by one or more handler overlay nodes.

The command queue manager 1010 may include suitable logic, circuitry, interfaces, and/or code, executable by the circuitry, that may be configured to create a queue of command-type messages received by the overlay system 202 and store the command-type messages in the command registry and repository 1002. The command queue manager 1010 may be further configured to retrieve command-type messages from the command registry and repository 1002 when they are to be executed or loaded in a local memory queue.

The command event queue manager 1012 may include suitable logic, circuitry, interfaces, and/or code, executable by the circuitry, that may be configured to create a queue of event-type messages, to be executed in response to the command-type messages, received by the overlay system 202. The command event queue manager 1012 may store the event-type messages in the command event registry and repository 1004. The command event queue manager 1012 may be further configured to retrieve the event-type messages from the command event registry and repository 1004 when they are to be executed or loaded in the local memory queue.

The query queue manager 1014 may include suitable logic, circuitry, interfaces, and/or code, executable by the circuitry, that may be configured to create a queue of query-type messages received by the overlay system 202 and store the query-type messages in the query registry and repository 1006. The query queue manager 1014 may be further configured to retrieve query-type messages from the query registry and repository 1006 when they are to be executed or loaded in the local memory queue. Notably, in case there are multiple command-type messages in the query registry and repository 1006, the query-type messages are executed in a parallel manner as each query-type message is independent of other query-type messages.

The query event queue manager 1016 may include suitable logic, circuitry, interfaces, and/or code, executable by the circuitry, that may be configured to create a queue of event-type messages to be executed in response to the query-type messages received by the overlay system 202. The query event queue manager 1016 may store the event-type messages in the query event registry and repository 1008. The query event queue manager 1016 may be further configured to retrieve the event-type messages from the query event registry and repository 1008 when they are to be executed or loaded in the local memory queue.

As shown, the message management module 214 interfaces with the executable graph-based model 100 by way of a message API 1018. The message API 1018 may have numerous interfaces such as a command (C) API 1020, a command event (CE) API 1022, a query (Q) API 1024, and a query event (QE) API 1026. The C API 1020 is a dedicated interface for command-type messages, the CE API 1022 is a dedicated interface for command events that are executed in response to the execution of the command-type messages, the Q API 1024 is a dedicated interface for query-type messages, and the QE API 1026 is a dedicated interface for events executed in response to the query-type messages.

In operation, the message management module 214 may receive multiple messages that may include command-type messages, query-type messages, and event-type messages. The message management module 214 may further receive internal messages including command-type messages, query-type messages, and event-type messages generated in response to execution of the received messages. However, executing all the messages simultaneously may not be necessary or possible. Therefore, the message management module 214 may perform scheduling of messages, and hence, apart from messages that are being executed, the message management module 214 may store all the other messages in respective registry and repository (for example, the command registry and repository 1002, the command event registry and repository 1004, the query registry and repository 1006, and the query event registry and repository 1008) and may retrieve the messages when it is to be processed.

It will be apparent to a person skilled in the art that FIG. 10 is non-limiting and hence does not limit the scope of the present disclosure.

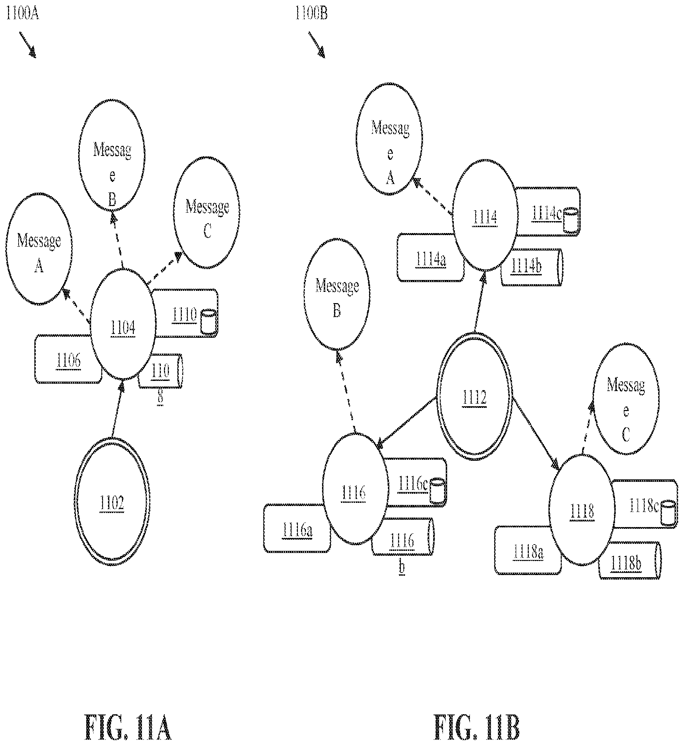

FIG. 11A is a block diagram 1100A that illustrates handling of messages by an executable node, in accordance with an embodiment of the present disclosure. Referring to FIG. 11A, an executable node 1102 is shown to be extended to include a handler overlay node 1104 that may be a command handler overlay node, a query handler overlay node, or an event handler overlay node. The handler overlay node 1104 may have subscribed to a plurality of messages including message A, message B, and message C. FIG. 11A thus illustrates a one-to-many mapping of the handler overlay node of an executable node and messages to be processed thereby. In other words, the message handling of FIG. 11A describes one handler overlay handling multiple messages.

The handler overlay node 1104 is associated with a message executor 1106 that is configured to execute an operation associated with a message being processed by the handler overlay node 1104. The handler overlay node 1104 is further associated with a local memory queue 1108 that includes one or more channels where each channel may include a queue associated with a corresponding topic or message type that is subscribed by the executable node 1102. The local memory queue 1108 is responsible for controlling and regulating the processing of each message that is received by the handler overlay node 1104. Further, the handler overlay node 1104 is associated with a local message store 1110 that is configured to store a message (for example, messages A, B, and C) or a header of the message that may be an identifier to the message that stored in corresponding repository (for example, the command registry and repository 1002, the command event registry and repository 1004, the query registry and repository 1006, and the query event registry and repository 1008).

In an instance, when the local message store 1110 stores the message header, the message executor 1106 may make a call to corresponding API (for example, the C API 1020, the CE API 1022, the Q API 1024, and the QE API 1026) based on which the message is communicated to the message executor 1106 via the corresponding queue manager (for example, the command queue manager 1010, the command event queue manager 1012, the query queue manager 1014, and the query event queue manager 1016). In another instance, when any one of the message executor 1106, the local memory queue 1108, and the local message store 1110 fails during recovery, the message management module 214 may recover and reestablish connection therebetween. Subsequently, the message executor 1106 may make a call to one or more relevant APIs to re-communicate message(s) that are to be executed by the executable node 1102. Beneficially, permanent storage of messages in the corresponding repository allows for an optimized use of local memory (*e.g.,* random access memory and cache).

FIG. 11B is a block diagram 1100B that illustrates the handling of messages by the executable node, in accordance with another embodiment of the present disclosure. Referring now to FIG. 11B, an executable node 1112 is shown to be extended to include three handler overlay nodes 1114-1118. Each of the handler overlay nodes 1114-1118 may be a command handler overlay node, a query handler overlay node, an event handler overlay node, or any other type of overlay node. The handler overlay node 1114 is mapped to process the message A and is associated with corresponding message executor 1114a, local memory queue 1114b, and local message store 1114c. The handler overlay node 1116 is mapped to process the message B and is associated with corresponding message executor 1116a, local memory queue 1116b, and local message store 1116c. Similarly, the handler overlay node 1118 is mapped to process the message C and is associated with corresponding message executor 1118a, local memory queue 1118b, and local message store 1118c. FIG. 11B illustrates a one-to-one mapping of handler overlay nodes of an executable node and messages to be processed thereby. In other words, the message handling of FIG. 11B describes one handler overlay handling one message.

The message executors 1114a, 1116a, and 1118a have a description that is similar to that of the message executor 1106. The local memory queues 1114b, 1116b, and 1118b have a description that is similar to the local memory queue 1108. The local message stores 1114c, 1116c, and 1118c have a description that is similar to the local message store 1110.

It will be apparent that FIGS. 11A and 11B are exemplary and do not limit the scope of the present disclosure.

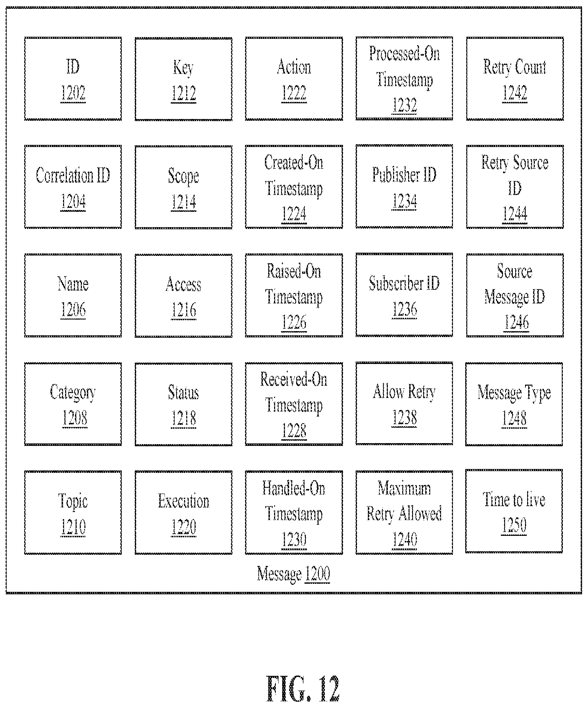

FIG. 12 is a block diagram that illustrates a composition of a message 1200, in accordance with an embodiment of the present disclosure. As mentioned earlier, the message 1200 may be a command-type message, a query-type message, or an event-type message. The message includes information (for example, ID, correlation ID, name, key, action, or the like) that may be used for communication, processing, and auditing. Referring to FIG. 12, the message 1200 includes an ID 1202, a correlation ID 1204, a name 1206, a category 1208, a topic 1210, a key 1212, a scope 1214, an access 1216, a status 1218, execution 1220, action 1222, a created-on timestamp 1224, a raised-on timestamp 1226, a received-on timestamp 1228, a handled-on timestamp 1230, a processed-on timestamp 1232, a publisher ID 1234, a subscriber ID 1236, allow retry 1238, maximum retry allowed 1240, retry count 1242, a retry source ID 1244, a source message ID 1246, a message type 1248, and time to live 1250.

The ID 1202 included in the message 1200 is a unique ID associated therewith and may be used by modules (for example, the message management module 214) of the overlay system 202 to identify the message 1200.

The correlation ID 1204 included in the message 1200 is an ID that is shared among messages that are related. The correlation ID is used to join and correlate one or more messages in a transaction flow such as a command to event, a query to event, or the like. Each sub-message (child message) of a compound message (parent message) includes a hierarchical correlation ID. Further, sub-messages at the same level of hierarchy have identical correlation IDs. Sub-messages at each subsequent hierarchical level further include correlation IDs of sub-messages at previous hierarchical levels. Each sub-message also includes a root identifier that is associated with the parent message.

The name 1206 included in the message 1200 is a human-understandable descriptor of the message and is solely included for the ease of understanding of users associated with the overlay system 202.

The category 1208 included in the message 1200 is a human-understandable descriptor of a domain or criterion of the message. For example, a category of the message 1200 may be a hand movement message.

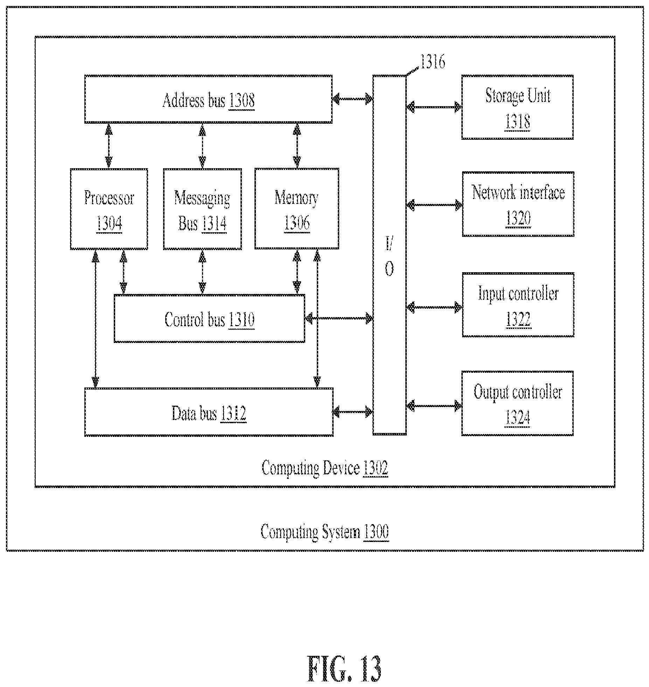

The topic 1210 included in the message 1200 is a human-understandable descriptor of a topic associated with which the message 1200 has been published. Notably, the topic allows the grouping of multiple messages irrespective of their category. Each message may be associated with a single topic whereas each topic may be associated with multiple messages. Each topic can have one or more subscribers. Each topic may be published/scheduled for processing using a specific pipeline of a messaging bus (shown in FIG. 13) and then subscribed to by one or more handler overlay nodes.

The key 1212 included in the message 1200 corresponds to a target object unique identifier that is an identifier of a destination executable node of the message 1200. Messages having the same key have the same target object unique identifier. The key 1212 allows messages with the same key and same topic to be queued, so they are processed in order by the target object (destination executable node).

The scope 1214 included in the message 1200 is a field that ensures the appropriate security of the message 1200. The message 1200 may be internal, e.g., the message 1200 is to be communicated among executable nodes of the executable graph-based model 100. Alternatively, the message 1200 may be external, *e.g*., the message 1200 is to be communicated from one or more executable nodes of the executable graph-based model 100 to one or more modules that are external to the overlay system 202. Therefore, a value of the scope within the message 1200 may be one of 'internal', 'external', and `internal and external'.

The access 1216 included in the message 1200 is a field that determines access permission to the message 1200. In an instance, when a value of the access 1216 is public, a user trying to access the message 1200 is not required to be authenticated prior to accessing the message 1200. In another instance, when the value of the access 1216 is private, a user trying to access the message 1200 is required to be authenticated prior to accessing the message 1200.

The status 1218 included in the message 1200 is indicative of the progress of execution of the message 1200. A value of the status 1218 of the message 1200 may be one of created, raised, received, handled, and processed.

The execution 1220 included in the message 1200 is indicative of a path that is to be traveled by the message 1200 to reach the destination executable node. The execution 1220 may have a value 'synchronous' or 'asynchronous'. In an instance, when the message 1200 has the value of the execution 1220 field as 'asynchronous', the message 1200 may follow a hierarchical path associated with the hierarchical structure of the executable graph-based model 100. In another instance, when the message 1200 has the value of the execution 1220 field as 'synchronous', the message 1200 may be communicated directly from a source executable node (an executable node that has received the stimulus 230) to the destination executable node. Synchronous communication of message requires less time for communication of the message 1200 and can be used when the message is only directed to the destination executable node and does not require any sequence in operation(s) to be performed based on the processing of the message 1200.

The action 1222 included in the message 1200 is indicative of an action or operation to be performed by the target object. The terms 'target object' and 'destination executable node' are used interchangeably and may execute an operation indicated by the action 1222 in conjunction with the corresponding base node.

The created-on timestamp 1224 included in the message 1200 includes details (such as time, date, or the like) regarding the creation of the message 1200 by its source executable node.

The raised-on timestamp 1226 included in the message 1200 includes details (such as time, date, or the like) regarding the publication of the message 1200 in the message bus by its source executable node.

The received-on timestamp 1228 included in the message 1200 includes details (such as time, date, or the like) regarding when the message 1200 is received by the destination executable node but has not been processed.

The handled-on timestamp 1230 included in the message 1200 includes details (such as time, date, or the like) associated with a point in time when the processing of the message 1200 is initiated.

The processed-on timestamp 1232 included in the message 1200 includes details (such as time, date, or the like) regarding when the processing of the message 1200 gets completed.

The publisher ID 1234 included in the message 1200 is a unique ID for a publisher overlay node that has published the message 1200. The publisher ID 1234 may be associated with the source executable node or an intermediate executable node.

The subscriber ID 1236 included in the message 1200 is a unique ID for a handler overlay node(s) that subscribe to the message 1200. Notably, a command-type message and a query-type message may be subscribed by a single executable node whereas an event-type message may be subscribed by multiple executable nodes and each executable node receives a copy of the event-type message.

The allow retry 1238 included in the message 1200 is a field that ensures successful communication and processing of the message 1200. A value of the allow retry 1238 determines if the message 1200 is to be re-published in case a status of the message 1200 is a failure or partial failure. The re-published message 1200 may be a clone of the original message 1200.

The maximum retry allowed 1240 included in the message 1200 determines a maximum count for which the message 1200 is to be re-published in case the status of the message is a failure or partial failure.

The retry count 1242 included in the message 1200 keeps track of a number of times for which the message 1200 is re-published. That is to say that the retry count 1242 is indicative of a current count of re-publications of the message 1200. A value of the retry count 1242 gets incremented with each re-publication of the message 1200.

The retry source ID 1244 included in the message 1200 is a field that includes a unique ID of an original message (*e.g*., the message 1200) that is being re-published. The retry source ID is required as during the re-publication of the message 1200, a clone message thereof with a different ID is generated and published. The clone message has timestamps (*e.g*., created-on timestamp, received-on timestamp, or the like) that are different from the timestamps included in the message 1200. Therefore, in order to link the clone message to the message 1200, the retry source ID 1244 is included in the clone message.

The source message ID 1246 is included in the message 1200 if the message 1200 has originated from another message. For example, an event-type message that is created in response to the processing of a command-type message may have a source message ID that is identical to a unique ID of the command-type message.

The message type 1248 is a field of the message 1200 that is indicative of the message 1200 being a leaf message or a composite message The leaf message does not have any sub-messages whereas the composite message is a message having two or more sub-messages. In an example, the message type 1248 may have a value composite message that is indicative of the message 1200 being a composite message. In another example, the message type 1248 may have a value leaf message that is indicative of the message 1200 being a leaf message.

The message 1200 may further include time to live 1250 that may be indicative of a time period during which the message 1200 may be valid. Therefore, the message 1200 should be communicated and processed within a duration that is indicated by the time to live 1250. In an instance of failure or partial failure, the message 1200 should not be re-published once the period indicated by the time to live 1250 has lapsed. Notably, the lapse of the duration indicated by the time to live 1250 is indicative of the message 1200 being invalid.

The components of the message 1200 described above may be used by the overlay system 202 for performing an audit thereof in order to optimize its performance for facilitating in-situ communication using the executable graph-based model 100.

It will be apparent to a person skilled in the art that the composition of the message 1200 described in conjunction with FIG. 12 is non-limiting and in other embodiments components included in the message 1200 may differ from the components depicted in FIG. 12.

FIG. 13 shows an example computing system 1300 for carrying out the methods of the present disclosure, in accordance with an embodiment of the present disclosure. Specifically, FIG. 13 shows a block diagram of an embodiment of the computing system 1300 according to example embodiments of the present disclosure.

The computing system 1300 may be configured to perform any of the operations disclosed herein, such as, for example, any of the operations discussed with reference to the functional modules described in relation to FIG. 2. The computing system 1300 can be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. In one embodiment, the computing system 1300 is a distributed system configured to function using multiple computing machines interconnected via a data network or bus system.

The computing system 1300 includes computing devices (such as a computing device 1302). The computing device 1302 includes one or more processors (such as a processor 1304) and a memory 1306. The processor 1304 may be any general-purpose processor(s) configured to execute a set of instructions. For example, the processor 1304 may be a processor core, a multiprocessor, a reconfigurable processor, a microcontroller, a digital signal processor (DSP), an application-specific integrated circuit (ASIC), a graphics processing unit (GPU), a neural processing unit (NPU), an accelerated processing unit (APU), a brain processing unit (BPU), a data processing unit (DPU), a holographic processing unit (HPU), an intelligent processing unit (IPU), a microprocessor/microcontroller unit (MPU/MCU), a radio processing unit (RPU), a tensor processing unit (TPU), a vector processing unit (VPU), a wearable processing unit (WPU), a field programmable gate array (FPGA), a programmable logic device (PLD), a controller, a state machine, gated logic, discrete hardware component, any other processing unit, or any combination or multiplicity thereof. In one embodiment, the processor 1304 may be multiple processing units, a single processing core, multiple processing cores, special purpose processing cores, co-processors, or any combination thereof. The processor 1304 may be communicatively coupled to the memory 1306 via an address bus 1308, a control bus 1310, a data bus 1312, and a messaging bus 1314.

The memory 1306 may include non-volatile memories such as a read-only memory (ROM), a programable read-only memory (PROM), an erasable programmable read-only memory (EPROM), a flash memory, or any other device capable of storing program instructions or data with or without applied power. The memory 1306 may also include volatile memories, such as a random-access memory (RAM), a static random-access memory (SRAM), a dynamic random-access memory (DRAM), and a synchronous dynamic random-access memory (SDRAM). The memory 1306 may include single or multiple memory modules. While the memory 1306 is depicted as part of the computing device 1302, a person skilled in the art will recognize that the memory 1306 can be separate from the computing device 1302.

The memory 1306 may store information that can be accessed by the processor 1304. For instance, the memory 1306 *(e.g.,* one or more non-transitory computer-readable storage mediums, memory devices) may include computer-readable instructions (not shown) that can be executed by the processor 1304. The computer-readable instructions may be software written in any suitable programming language or may be implemented in hardware. Additionally, or alternatively, the computer-readable instructions may be executed in logically and/or virtually separate threads on the processor 1304. For example, the memory 1306 may store instructions (not shown) that when executed by the processor 1304 cause the processor 1304 to perform operations such as any of the operations and functions for which the computing system 1300 is configured, as described herein. Additionally, or alternatively, the memory 1306 may store data (not shown) that can be obtained, received, accessed, written, manipulated, created, and/or stored. The data can include, for instance, the data and/or information described herein in relation to FIGS. 1-12. In some implementations, the computing device 1302 may obtain from and/or store data in one or more memory device(s) that are remote from the computing system 1300.

The computing device 1302 may further include an input/output (I/O) interface 1316 communicatively coupled to the address bus 1308, the control bus 1310, and the data bus 1312. The data bus 1312 and messaging bus 1314 may include a plurality of tunnels that may support parallel execution of messages by the overlay system 202. The I/O interface 1316 is configured to couple to one or more external devices (*e.g*., to receive and send data from/to one or more external devices). Such external devices, along with the various internal devices, may also be known as peripheral devices. The I/O interface 1316 may include both electrical and physical connections for operably coupling the various peripheral devices to the computing device 1302. The I/O interface 1316 may be configured to communicate data, addresses, and control signals between the peripheral devices and the computing device 1302. The I/O interface 1316 may be configured to implement any standard interface, such as a small computer system interface (SCSI), a serial-attached SCSI (SAS), a fiber channel, a peripheral component interconnect (PCI), a PCI express (PCIe), a serial bus, a parallel bus, an advanced technology attachment (ATA), a serial ATA (SATA), a universal serial bus (USB), Thunderbolt, FireWire, various video buses, and the like. The I/O interface 1316 is configured to implement only one interface or bus technology. Alternatively, the I/O interface 1316 is configured to implement multiple interfaces or bus technologies. The I/O interface 1316 may include one or more buffers for buffering transmissions between one or more external devices, internal devices, the computing device 1302, or the processor 1304. The I/O interface 1316 may couple the computing device 1302 to various input devices, including mice, touch screens, scanners, biometric readers, electronic digitizers, sensors, receivers, touchpads, trackballs, cameras, microphones, keyboards, any other pointing devices, or any combinations thereof. The I/O interface 1316 may couple the computing device 1302 to various output devices, including video displays, speakers, printers, projectors, tactile feedback devices, automation control, robotic components, actuators, motors, fans, solenoids, valves, pumps, transmitters, signal emitters, lights, and so forth.

The computing system 1300 may further include a storage unit 1318, a network interface 1320, an input controller 1322, and an output controller 1324. The storage unit 1318, the network interface 1320, the input controller 1322, and the output controller 1324 are communicatively coupled to the central control unit (e.g., the memory 1306, the address bus 1308, the control bus 1310, and the data bus 1312) via the I/O interface 1316. The network interface 1320 communicatively couples the computing system 1300 to one or more networks such as wide area networks (WAN), local area networks (LAN), intranets, the Internet, wireless access networks, wired networks, mobile networks, telephone networks, optical networks, or combinations thereof. The network interface 1320 may facilitate communication with packetswitched networks or circuit-switched networks which use any topology and may use any communication protocol. Communication links within the network may involve various digital or analog communication media such as fiber optic cables, free-space optics, waveguides, electrical conductors, wireless links, antennas, radio-frequency communications, and so forth.

The storage unit 1318 is a computer-readable medium, preferably a non-transitory computer-readable medium, comprising one or more programs, the one or more programs comprising instructions which when executed by the processor 1304 cause the computing system 1300 to perform the method steps of the present disclosure. Alternatively, the storage unit 1318 is a transitory computer-readable medium. The storage unit 1318 can include a hard disk, a floppy disk, a compact disc read-only memory (CD-ROM), a digital versatile disc (DVD), a Blu-ray disc, a magnetic tape, a flash memory, another non-volatile memory device, a solidstate drive (SSD), any magnetic storage device, any optical storage device, any electrical storage device, any semiconductor storage device, any physical-based storage device, any other data storage device, or any combination or multiplicity thereof. In one embodiment, the storage unit 1318 stores one or more operating systems, application programs, program modules, data, or any other information. The storage unit 1318 is part of the computing device 1302. Alternatively, the storage unit 1318 is part of one or more other computing machines that are in communication with the computing device 1302, such as servers, database servers, cloud storage, network attached storage, and so forth.

The input controller 1322 may include suitable logic, circuitry, interfaces, and/or code, executable by the circuitry, that may be configured to control one or more input devices that may be configured to receive an input (the stimulus 230) for the overlay system 202. The output controller 1324 may include suitable logic, circuitry, interfaces, and/or code, executable by the circuitry, that may be configured to control one or more output devices that may be configured to render/output the outcome of the operation executed to process the received input (the stimulus 230).

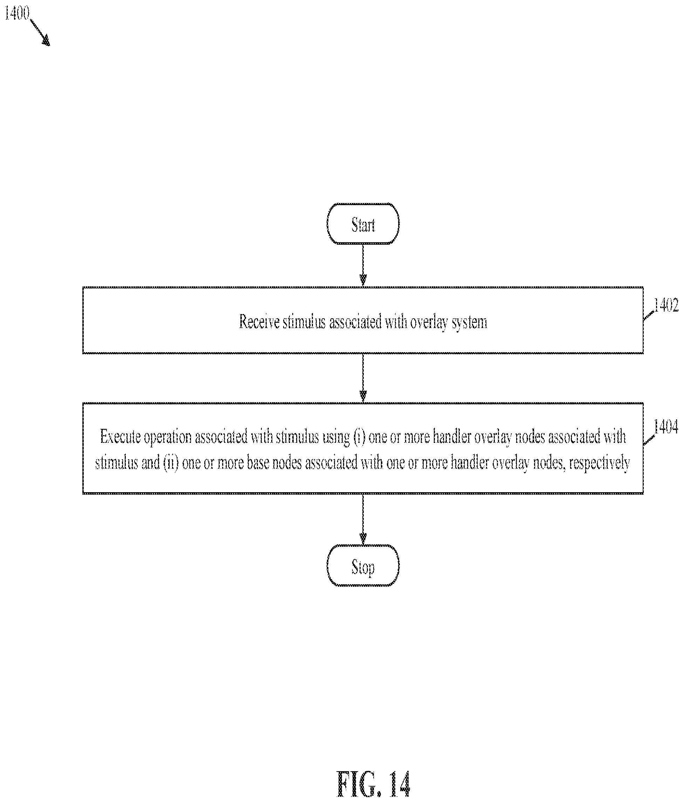

FIG. 14 is a flowchart 1400 that illustrates a method for facilitating in-situ communication using the executable graph-based model 100, in accordance with an embodiment of the present disclosure. Referring to FIG. 14, at 1402, the controller module 206 *(e.g.,* the processing circuitry of the overlay system 202) receives a stimulus (*e.g*., the stimulus 230) of the overlay system 202. At 1404, the message management module 214 executes the operation associated with the stimulus 230 using one or more handler overlay nodes associated with the stimulus 230, and one or more base nodes associated with the one or more handler overlay nodes, respectively.

The disclosed embodiments encompass numerous advantages including an efficient and seamless approach for facilitation of in-situ communication using executable graph-based models. The systems and methods disclosed herein provide for an ability to dynamically modify the communication channel that is structure of the executable graph-based model 100. The systems and methods disclosed herein also allow for dynamic scale-up or scale-down in a count of modules communicating via the executable graph-based model 100. Moreover, the disclosed system and methods may exhibit a consistent performance even with limited storage and processing resources as all the data and processing logic associated with the executable graph-based model 100 is loaded as per the requirement thereof. The systems and methods disclosed herein allow for the segregation of data and processing logic and hence ensure mutual independence thereof. Also, the systems and methods ensure successful communication of messages by indicating the status of the processing of the messages. Moreover, the systems and methods disclosed herein provide for a parallel communication of messages to destination nodes. Additionally, the systems and methods disclosed herein allow for the processing of messages to be performed at the node level and in a parallel manner. Such parallelism in the communication and processing of messages allows for a significant reduction in latency in communication and handling of messages. Application areas of the systems and methods disclosed herein may include, but are not limited to, industrial processes, robotics, home security, automation industry, or the like.

Certain embodiments of the disclosure may be found in the disclosed systems, methods, and non-transitory computer-readable medium, for facilitating in-situ communication using executable graph-based models. The methods and systems disclosed herein include various operations performed by the processing circuitry (*e.g*., the controller module 206, the transaction module, 208, the message management module 214, any other element of the overlay system 202, or a combination of two or more elements of the overlay system 202). The overlay system 202 disclosed herein includes the storage element configured to store the executable graph-based model 100 that includes the plurality of executable nodes *(e.g.,* the executable nodes 602 and 604 shown in FIG. 6). Each executable node includes (i) a base node *(e.g.,* the base nodes 602b and 604b of the executable nodes 602 and 604, respectively, as shown in FIG. 6) and (ii) a set of handler overlay nodes *(e.g.,* the handler overlay nodes 602d and 604c of the executable nodes 602 and 604, respectively, as shown in FIG. 6), with each handler overlay node configured to subscribe to a first set of messages mapped to the corresponding executable node and process the first set of messages in conjunction with the corresponding base node. The overlay system 202 also includes the processing circuitry that is coupled to the storage element, and configured to receive the stimulus 230 associated with the overlay system 202 and execute an operation associated with the stimulus 230 using (i) one or more handler overlay nodes, of the plurality of executable nodes, associated with the context 226 of the stimulus 230 and (ii) one or more base nodes associated with the one or more handler overlay nodes, respectively.

In some embodiments, the set of handler overlay nodes of each executable node includes at least one of a group consisting of (i) the command handler overlay node configured to subscribe to and process the command-type message, (ii) the query handler overlay node configured to subscribe to and process query-type message, and (iii) an event handler overlay node configured to subscribe to and process an event-type message.

In some embodiments, prior to the execution of the operation associated with the stimulus 230, the processing circuitry is further configured to load, in the executable graph-based model 100, at least one of a group consisting of the one or more base nodes and the one or more handler overlay nodes, with corresponding data and processing logic.

In some embodiments, the stimulus 230 corresponds to one of a group consisting of the command-type message, the query-type message, and the event-type message.

In some embodiments, each executable node further includes a set of publisher overlay nodes (*e.g.,* the publisher overlay node 602c of the executable node 602 shown in FIG. 6,), with each publisher overlay node configured to generate and publish a second set of messages to be communicated by the corresponding executable node. The processing circuitry executes the operation associated with the stimulus 230 further based on one or more publisher overlay nodes associated with the context 226 of the stimulus 230.

In some embodiments, for each executable node of the plurality of executable nodes, each handler overlay node corresponds to an overlay of the base node of the corresponding executable node, and each publisher overlay node corresponds to an overlay of one of a group consisting of (i) the base node and (ii) a handler overlay node of the corresponding executable node.

In some embodiments, the second set of messages is at least one of a group consisting of (i) independent of the processing of the first set of messages and (ii) a result of the processing of the first set of messages.

In some embodiments, the set of publisher overlay nodes of each executable node includes at least one of a group consisting of (i) the command publisher overlay node configured to generate and publish the command-type messages, (ii) the query publisher overlay node configured to generate and publish the query-type messages, and (iii) the event publisher overlay node configured to generate and publish the event-type messages.

In some embodiments, prior to the execution of the operation associated with the stimulus 230, the processing circuitry is further configured to load, in the executable graph-based model 100, at least one of a group consisting of (i) the one or more base nodes, (ii) the one or more handler overlay nodes, and (iii) the one or more publisher overlay nodes, with corresponding data and processing logic.

In some embodiments, during the execution of the operation, (i) a publisher overlay node of a first executable node is configured to generate a first message for stimulus processing based on the context 226 of the stimulus 230 and publish the first message and (ii) a handler overlay node of a second executable node is configured to subscribe to the first message and process the first message in conjunction with a base node of the second executable node. The processing of the first message corresponds to the execution of the operation associated with the stimulus 230.

In some embodiments, in case the stimulus 230 corresponds to one of the command-type message and the query-type message, a publisher overlay node of the second executable node is configured to generate a first event based on the processing of the first message and publish the first event. A handler overlay node of the first executable node is configured to subscribe to the first event, and a different publisher overlay node of the first executable node is configured to publish the first event. The processing circuitry is further configured to generate the outcome 234 for the stimulus 230 based on the first event.

In some embodiments, in case the stimulus 230 corresponds to the command-type message, the first event includes at least one of a previous state and an updated state of the second executable node. In case the stimulus 230 corresponds to the query-type message, the first event includes a current state of the second executable node.

In some embodiments, in case the first event is subscribed by two or more handler overlay nodes, a copy of the first event is received by each handler overlay node that is subscribed to the first event.

In some embodiments, a publisher overlay node of the second executable node is configured to generate and publish a second message based on the processing of the first message. The second message corresponds to one of a group consisting of the command-type message and the query-type message. The second message is subscribed by one of a group consisting of (i) the first executable node, (ii) the second executable node, and (iii) a third executable node that is different from the first and second executable nodes.

In some embodiments, a publisher overlay node of the second executable node is configured to generate and publish a second message based on the processing of the first message. The second message corresponds to one of a group consisting of the command-type message, the query-type message, and the event-type message. The processing of the first message and the publication of the second message are executed in one of a group consisting of (i) a serial manner and (ii) a parallel manner.

In some embodiments, during the execution of the operation, a publisher overlay node of a first executable node is configured to (i) generate a first message for stimulus processing based on the context 226 of the stimulus 230, where the first message includes a plurality of sub-messages, and (ii) publish the first message. Further, a handler overlay node of a second executable node is configured to subscribe to the first message and process a first set of sub-messages mapped to the second executable node, in conjunction with a base node of the second executable node. A publisher overlay node of the second executable node is configured to generate a second message based on the processing of the first set of sub-messages and publish the second message. Further, one or more intermediate executable nodes hierarchically associated with the second executable node are configured to generate and publish a third message based on hierarchical processing of the second message. A last handler overlay node of a last executable node is configured to subscribe to the third message and process the third message in conjunction with a base node of the last executable node. The processing of the third message corresponds to the execution of the operation associated with the stimulus 230.

In some embodiments, the second message includes one of a group consisting of (i) remaining sub-messages of the first message and (ii) a modified version of the first message based on the processing of the first set of sub-messages of the first message.

In some embodiments, a result of the processing of the first set of sub-messages is one of a group consisting of (i) a success, (ii) a failure, and (iii) a partial failure. In case the processing of the first set of sub-messages fails, a different publisher overlay node of the second executable node is further configured to generate and publish one of a failure event and a partial failure event, where the failure event and the partial failure event are subscribed by the first executable node.

In some embodiments, in case the stimulus 230 corresponds to one of the command-type message and the query-type message, a last publisher overlay node of the last executable node is configured to generate a first event based on the processing of the third message and publish the first event. The one or more intermediate executable nodes are configured to generate and publish a second event based on hierarchical processing of the first event. A different handler overlay node of the second executable node is configured to subscribe to the second event and process the second event in conjunction with the base node of the second executable node, and a different publisher overlay node of the second executable node is configured to generate and publish a third event based on the processing of the second event. A handler overlay node of the first executable node is configured to subscribe to the third event and a different publisher overlay node of the first executable node is configured to publish the third event. The processing circuitry is further configured to generate the outcome 234 for the stimulus 230 based on the third event.

In some embodiments, the processing of the first set of sub-messages results in generation of a first set of sub-events. The third event is generated as an aggregation of the first set of sub-events and the second event.

In some embodiments, in case the stimulus 230 corresponds to the command-type message, the third event includes at least one of a previous state and an updated state of each executable node that processes at least one sub-message of the first message. In case the stimulus 230 corresponds to the query-type message, the third event includes a current state of each executable node that processes at least one sub-message of the first message.

In some embodiments, in case the stimulus 230 corresponds to one of the command-type message and the query-type message, a last publisher overlay node of the last executable node is configured to generate a first event based on the processing of the third message and publish the first event. A handler overlay node of the first executable node is configured to subscribe to the first event and a different publisher overlay node of the first executable node is configured to publish the first event. The processing circuitry is further configured to generate the outcome 234 for the stimulus 230 based on the first event.

In some embodiments, in case the stimulus 230 corresponds to the command-type message, the first event includes at least one of a previous state and an updated state of the last executable node. In case the stimulus 230 corresponds to the query-type message, the first event includes a current state of the last executable node.

In some embodiments, a last publisher overlay node of the last executable node is configured to generate a fourth message based on the processing of the third message and publish the fourth message. The fourth message corresponds to one of a group consisting of the command-type message and the query-type message.

In some embodiments, a status of the operation is one of a group consisting of a success, a failure, and a partial failure. In case the status of the operation is one of the failure and the partial failure, the processing circuitry is further configured to re-execute the operation associated with the stimulus 230.

In some embodiments, the processing circuitry re-executes the operation for a predefined count during a predefined time-interval. The processing circuitry is further configured to generate an alert in case the status of the operation remains one of the failure and the partial failure after at least one of (i) the execution of the operation for the pre-defined count and (ii) a lapse of the predefined time-interval.

In some embodiments, the base node of each executable node of the plurality of executable nodes corresponds to one of a hyper-edge node and a vertex node.

In some embodiments, a first base node and a second base node of the executable graph-based model 100 are coupled by way of a role that defines a relationship between the first base node and the second base node.

A person of ordinary skill in the art will appreciate that embodiments and exemplary scenarios of the disclosed subject matter may be practiced with various computer system configurations, including multi-core multiprocessor systems, minicomputers, mainframe computers, computers linked or clustered with distributed functions, as well as pervasive or miniature computers that may be embedded into virtually any device. Further, the operations may be described as a sequential process, however, some of the operations may be performed in parallel, concurrently, and/or in a distributed environment, and with program code stored locally or remotely for access by single or multiprocessor machines. In addition, in some embodiments, the order of operations may be rearranged without departing from the spirit of the disclosed subject matter.

Techniques consistent with the present disclosure provide, among other features, systems and methods for facilitating in-situ communication using executable graph-based models. While various embodiments of the disclosed systems and methods have been described above, it should be understood that they have been presented for purposes of example only, and not limitations. It is not exhaustive and does not limit the present disclosure to the precise form disclosed. Modifications and variations are possible in light of the above teachings or may be acquired from practicing the present disclosure, without departing from the breadth or scope.

Moreover, for example, the present technology/system may achieve the following configurations:
1. An overlay system, comprising:
   a storage element configured to store an executable graph-based model that comprises a plurality of executable nodes, wherein each executable node comprises (i) a base node and (ii) a set of handler overlay nodes, with each handler overlay node configured to subscribe to a first set of messages mapped to the corresponding executable node and process the first set of messages in conjunction with the corresponding base node; and
   processing circuitry that is coupled to the storage element, and configured to receive a stimulus associated with the overlay system and execute an operation associated with the stimulus using (i) one or more handler overlay nodes, of the plurality of executable nodes, associated with a context of the stimulus and (ii) one or more base nodes associated with the one or more handler overlay nodes, respectively.
2. The overlay system of 1, wherein the set of handler overlay nodes of each executable node comprises at least one of a group consisting of (i) a command handler overlay node configured to subscribe to and process a command-type message, (ii) a query handler overlay node configured to subscribe to and process a query-type message, and (iii) an event handler overlay node configured to subscribe to and process an event-type message.
3. The overlay system of 1, wherein prior to the execution of the operation associated with the stimulus, the processing circuitry is further configured to load, in the executable graph-based model, at least one of a group consisting of the one or more base nodes and the one or more handler overlay nodes, with corresponding data and processing logic.
4. The overlay system of 1, wherein the stimulus corresponds to one of a group consisting of a command-type message, a query-type message, and an event-type message.
5. The overlay system of 1, wherein each executable node further comprises a set of publisher overlay nodes, with each publisher overlay node configured to generate and publish a second set of messages to be communicated by the corresponding executable node, and wherein the processing circuitry executes the operation associated with the stimulus further based on one or more publisher overlay nodes associated with the context of the stimulus.
6. The overlay system of 5, wherein for each executable node of the plurality of executable nodes, each handler overlay node corresponds to an overlay of the base node of the corresponding executable node, and each publisher overlay node corresponds to an overlay of one of a group consisting of (i) the base node and (ii) a handler overlay node of the corresponding executable node.
7. The overlay system of 5, wherein the second set of messages is at least one of a group consisting of (i) independent of the processing of the first set of messages and (ii) a result of the processing of the first set of messages.
8. The overlay system of 5, wherein the set of publisher overlay nodes of each executable node comprises at least one of a group consisting of (i) a command publisher overlay node configured to generate and publish a command-type message, (ii) a query publisher overlay node configured to generate and publish a query-type message, and (iii) an event publisher overlay node configured to generate and publish an event-type message.
9. The overlay system of 5, wherein prior to the execution of the operation associated with the stimulus, the processing circuitry is further configured to load, in the executable graph-based model, at least one of a group consisting of (i) the one or more base nodes, (ii) the one or more handler overlay nodes, and (iii) the one or more publisher overlay nodes, with corresponding data and processing logic.
10. The overlay system of 5,
   wherein during the execution of the operation, (i) a publisher overlay node of a first executable node is configured to generate a first message for stimulus processing based on the context of the stimulus and publish the first message and (ii) a handler overlay node of a second executable node is configured to subscribe to the first message and process the first message in conjunction with a base node of the second executable node, and
   wherein the processing of the first message corresponds to the execution of the operation associated with the stimulus.
11. The overlay system of 10,
   wherein in case the stimulus corresponds to one of a command-type message and a query-type message, a publisher overlay node of the second executable node is configured to generate a first event based on the processing of the first message and publish the first event,
   wherein a handler overlay node of the first executable node is configured to subscribe to the first event, and a different publisher overlay node of the first executable node is configured to publish the first event, and
   wherein the processing circuitry is further configured to generate an outcome for the stimulus based on the first event.
12. The overlay system of 11,
   wherein in case the stimulus corresponds to the command-type message, the first event comprises at least one of a previous state and an updated state of the second executable node, and
   wherein in case the stimulus corresponds to the query-type message, the first event comprises a current state of the second executable node.
13. The overlay system of 11, wherein in case the first event is subscribed by two or more handler overlay nodes, a copy of the first event is received by each handler overlay node that is subscribed to the first event.
14. The overlay system of 10,
   wherein a publisher overlay node of the second executable node is configured to generate and publish a second message based on the processing of the first message,
   wherein the second message corresponds to one of a group consisting of a command-type message and a query-type message, and
   wherein the second message is subscribed by one of a group consisting of (i) the first executable node, (ii) the second executable node, and (iii) a third executable node that is different from the first executable node and the second executable node.
15. The overlay system of 10, wherein a publisher overlay node of the second executable node is configured to generate and publish a second message based on the processing of the first message, wherein the second message corresponds to one of a group consisting of a command-type message, a query-type message, and an event-type message, and wherein the processing of the first message and the publication of the second message are executed in one of a group consisting of (i) a serial manner and (ii) a parallel manner.
16. The overlay system of 5,
   wherein during the execution of the operation,
      a publisher overlay node of a first executable node is configured to (i) generate a first message for stimulus processing based on the context of the stimulus, where the first message comprises a plurality of sub-messages, and (ii) publish the first message,
      a handler overlay node of a second executable node is configured to subscribe to the first message and process a first set of sub-messages mapped to the second executable node, in conjunction with a base node of the second executable node,
      a publisher overlay node of the second executable node is configured to generate a second message based on the processing of the first set of sub-messages and publish the second message,
      one or more intermediate executable nodes hierarchically associated with the second executable node are configured to generate and publish a third message based on hierarchical processing of the second message, and
      a last handler overlay node of a last executable node is configured to subscribe to the third message and process the third message in conjunction with a base node of the last executable node, and
   wherein the processing of the third message corresponds to the execution of the operation associated with the stimulus.
17. The overlay system of 16, wherein the second message comprises one of a group consisting of (i) remaining sub-messages of the first message and (ii) a modified version of the first message based on the processing of the first set of sub-messages of the first message.
18. The overlay system of 16, wherein a result of the processing of the first set of sub-messages is one of a group consisting of (i) a success, (ii) a failure, and (iii) a partial failure, and wherein in case the processing of the first set of sub-messages fails, a different publisher overlay node of the second executable node is further configured to generate and publish one of a failure event and a partial failure event, where the failure event and the partial failure event are subscribed by the first executable node.
19. The overlay system of 16,
   wherein in case the stimulus corresponds to one of a command-type message and a query-type message, a last publisher overlay node of the last executable node is configured to generate a first event based on the processing of the third message and publish the first event,
   wherein the one or more intermediate executable nodes are configured to generate and publish a second event based on hierarchical processing of the first event,
   wherein a different handler overlay node of the second executable node is configured to subscribe to the second event and process the second event in conjunction with the base node of the second executable node, and a different publisher overlay node of the second executable node is configured to generate and publish a third event based on the processing of the second event,
   wherein a handler overlay node of the first executable node is configured to subscribe to the third event and a different publisher overlay node of the first executable node is configured to publish the third event, and
   wherein the processing circuitry is further configured to generate an outcome for the stimulus based on the third event.
20. The overlay system of 19, wherein the processing of the first set of sub-messages results in generation of a first set of sub-events, and wherein the third event is generated as an aggregation of the first set of sub-events and the second event.
21. The overlay system of 19,
   wherein in case the stimulus corresponds to the command-type message, the third event comprises at least one of a previous state and an updated state of each executable node that processes at least one sub-message of the first message, and
   wherein in case the stimulus corresponds to the query-type message, the third event comprises a current state of each executable node that processes at least one sub-message of the first message.
22. The overlay system of 16,
   wherein in case the stimulus corresponds to one of a command-type message and a query-type message, a last publisher overlay node of the last executable node is configured to generate a first event based on the processing of the third message and publish the first event,
   wherein a handler overlay node of the first executable node is configured to subscribe to the first event and a different publisher overlay node of the first executable node is configured to publish the first event, and
   wherein the processing circuitry is further configured to generate an outcome for the stimulus based on the first event.
23. The overlay system of 22,
   wherein in case the stimulus corresponds to the command-type message, the first event comprises at least one of a previous state and an updated state of the last executable node, and
   wherein in case the stimulus corresponds to the query-type message, the first event comprises a current state of the last executable node.
24. The overlay system of 16,
   wherein a last publisher overlay node of the last executable node is configured to generate a fourth message based on the processing of the third message and publish the fourth message, and
   wherein the fourth message corresponds to one of a group consisting of a command-type message and a query-type message.
25. The overlay system of 1, wherein a status of the operation is one of a group consisting of a success, a failure, and a partial failure, and wherein in case the status of the operation is one of the failure and the partial failure, the processing circuitry is further configured to re-execute the operation associated with the stimulus.
26. The overlay system of 25, wherein the processing circuitry re-executes the operation for a pre-defined count during a predefined time-interval, and wherein the processing circuitry is further configured to generate an alert in case the status of the operation remains one of the failure and the partial failure after at least one of (i) the execution of the operation for the predefined count and (ii) a lapse of the predefined time-interval.
27. The overlay system of 1, wherein the base node of each executable node of the plurality of executable nodes corresponds to one of a hyper-edge node and a vertex node.
28. The overlay system of 1, wherein a first base node and a second base node of the executable graph-based model are coupled by way of a role that defines a relationship between the first base node and the second base node.
29. A method, comprising:
   receiving, by processing circuitry of an overlay system, a stimulus associated with the overlay system, wherein an executable graph-based model is stored in a storage element of the overlay system, wherein the executable graph-based model comprises a plurality of executable nodes, with each executable node comprising a base node and a set of handler overlay nodes, and wherein for each executable node, a first set of messages mapped thereto is subscribed by a handler overlay node, of the corresponding set of handler overlay nodes, and processed by the handler overlay node in conjunction with the corresponding base node; and
   executing, by the processing circuitry, an operation associated with the stimulus using (i) one or more handler overlay nodes, of the plurality of executable nodes, associated with a context of the stimulus and (ii) one or more base nodes associated with the one or more handler overlay nodes, respectively.

## Claims

1. An overlay system, comprising:
a storage element configured to store an executable graph-based model that comprises a plurality of executable nodes, wherein each executable node comprises (i) a base node and (ii) a set of handler overlay nodes, with each handler overlay node configured to subscribe to a first set of messages mapped to the corresponding executable node and process the first set of messages in conjunction with the corresponding base node; and
processing circuitry that is coupled to the storage element, and configured to receive a stimulus associated with the overlay system and execute an operation associated with the stimulus using (i) one or more handler overlay nodes, of the plurality of executable nodes, associated with a context of the stimulus and (ii) one or more base nodes associated with the one or more handler overlay nodes, respectively.

2. The overlay system of claim 1, wherein the set of handler overlay nodes of each executable node comprises at least one of a group consisting of (i) a command handler overlay node configured to subscribe to and process a command-type message, (ii) a query handler overlay node configured to subscribe to and process a query-type message, and (iii) an event handler overlay node configured to subscribe to and process an event-type message

3. The overlay system of claim 1, wherein prior to the execution of the operation associated with the stimulus, the processing circuitry is further configured to load, in the executable graph-based model, at least one of a group consisting of the one or more base nodes and the one or more handler overlay nodes, with corresponding data and processing logic.

4. The overlay system of claim 1, wherein the stimulus corresponds to one of a group consisting of a command-type message, a query-type message, and an event-type message.

5. The overlay system of claim 1, wherein each executable node further comprises a set of publisher overlay nodes, with each publisher overlay node configured to generate and publish a second set of messages to be communicated by the corresponding executable node, and wherein the processing circuitry executes the operation associated with the stimulus further based on one or more publisher overlay nodes associated with the context of the stimulus

6. The overlay system of claim 5, wherein for each executable node of the plurality of executable nodes, each handler overlay node corresponds to an overlay of the base node of the corresponding executable node, and each publisher overlay node corresponds to an overlay of one of a group consisting of (i) the base node and (ii) a handler overlay node of the corresponding executable node.

7. The overlay system of claim 5, wherein the second set of messages is at least one of a group consisting of (i) independent of the processing of the first set of messages and (ii) a result of the processing of the first set of messages.

8. The overlay system of claim 5, wherein the set of publisher overlay nodes of each executable node comprises at least one of a group consisting of (i) a command publisher overlay node configured to generate and publish a command-type message, (ii) a query publisher overlay node configured to generate and publish a query-type message, and (iii) an event publisher overlay node configured to generate and publish an event-type message.

9. The overlay system of claim 5, wherein prior to the execution of the operation associated with the stimulus, the processing circuitry is further configured to load, in the executable graph-based model, at least one of a group consisting of (i) the one or more base nodes, (ii) the one or more handler overlay nodes, and (iii) the one or more publisher overlay nodes, with corresponding data and processing logic.

10. The overlay system of claim 5,
wherein during the execution of the operation, (i) a publisher overlay node of a first executable node is configured to generate a first message for stimulus processing based on the context of the stimulus and publish the first message and (ii) a handler overlay node of a second executable node is configured to subscribe to the first message and process the first message in conjunction with a base node of the second executable node, and
wherein the processing of the first message corresponds to the execution of the operation associated with the stimulus.

11. The overlay system of claim 10,
wherein in case the stimulus corresponds to one of a command-type message and a query-type message, a publisher overlay node of the second executable node is configured to generate a first event based on the processing of the first message and publish the first event,
wherein a handler overlay node of the first executable node is configured to subscribe to the first event, and a different publisher overlay node of the first executable node is configured to publish the first event, and
wherein the processing circuitry is further configured to generate an outcome for the stimulus based on the first event.

12. The overlay system of claim 11,
wherein in case the stimulus corresponds to the command-type message, the first event comprises at least one of a previous state and an updated state of the second executable node, and
wherein in case the stimulus corresponds to the query-type message, the first event comprises a current state of the second executable node.

13. The overlay system of claim 11, wherein in case the first event is subscribed by two or more handler overlay nodes, a copy of the first event is received by each handler overlay node that is subscribed to the first event.

14. The overlay system of claim 10,
wherein a publisher overlay node of the second executable node is configured to generate and publish a second message based on the processing of the first message,
wherein the second message corresponds to one of a group consisting of a command-type message and a query-type message, and
wherein the second message is subscribed by one of a group consisting of (i) the first executable node, (ii) the second executable node, and (iii) a third executable node that is different from the first executable node and the second executable node.

15. The overlay system of claim 10, wherein a publisher overlay node of the second executable node is configured to generate and publish a second message based on the processing of the first message, wherein the second message corresponds to one of a group consisting of a command-type message, a query-type message, and an event-type message, and wherein the processing of the first message and the publication of the second message are executed in one of a group consisting of (i) a serial manner and (ii) a parallel manner.

16. The overlay system of claim 5,
wherein during the execution of the operation,
a publisher overlay node of a first executable node is configured to (i) generate a first message for stimulus processing based on the context of the stimulus, where the first message comprises a plurality of sub-messages, and (ii) publish the first message,
a handler overlay node of a second executable node is configured to subscribe to the first message and process a first set of sub-messages mapped to the second executable node, in conjunction with a base node of the second executable node,
a publisher overlay node of the second executable node is configured to generate a second message based on the processing of the first set of sub-messages and publish the second message,
one or more intermediate executable nodes hierarchically associated with the second executable node are configured to generate and publish a third message based on hierarchical processing of the second message, and
a last handler overlay node of a last executable node is configured to subscribe to the third message and process the third message in conjunction with a base node of the last executable node, and
wherein the processing of the third message corresponds to the execution of the operation associated with the stimulus.

17. The overlay system of claim 16, wherein the second message comprises one of a group consisting of (i) remaining sub-messages of the first message and (ii) a modified version of the first message based on the processing of the first set of sub-messages of the first message.

18. The overlay system of claim 16, wherein a result of the processing of the first set of sub-messages is one of a group consisting of (i) a success, (ii) a failure, and (iii) a partial failure, and wherein in case the processing of the first set of sub-messages fails, a different publisher overlay node of the second executable node is further configured to generate and publish one of a failure event and a partial failure event, where the failure event and the partial failure event are subscribed by the first executable node.

19. The overlay system of claim 16,
wherein in case the stimulus corresponds to one of a command-type message and a query-type message, a last publisher overlay node of the last executable node is configured to generate a first event based on the processing of the third message and publish the first event,
wherein the one or more intermediate executable nodes are configured to generate and publish a second event based on hierarchical processing of the first event,
wherein a different handler overlay node of the second executable node is configured to subscribe to the second event and process the second event in conjunction with the base node of the second executable node, and a different publisher overlay node of the second executable node is configured to generate and publish a third event based on the processing of the second event,
wherein a handler overlay node of the first executable node is configured to subscribe to the third event and a different publisher overlay node of the first executable node is configured to publish the third event, and
wherein the processing circuitry is further configured to generate an outcome for the stimulus based on the third event.

20. The overlay system of claim 19, wherein the processing of the first set of sub-messages results in generation of a first set of sub-events, and wherein the third event is generated as an aggregation of the first set of sub-events and the second event.
